(19) Europäisches Patentamt
European Patent Office
Office européen des brevets

(11) EP 4 293 078 A1

(12) EUROPEAN PATENT APPLICATION

(43) Date of publication:
**20.12.2023 Bulletin 2023/51**

(21) Application number: **22382566.2**

(22) Date of filing: **14.06.2022**

(51) International Patent Classification (IPC):
***C08L 65/00*** *(2006.01)* ***C09D 165/00*** *(2006.01)*
***C08G 61/12*** *(2006.01)*

(52) Cooperative Patent Classification (CPC):
**C09D 165/00; C08G 61/12; C08G 61/124; C08G 61/126; C08L 65/00;** C08G 2261/11; C08G 2261/124; C08G 2261/131; C08G 2261/132; C08G 2261/135; C08G 2261/1412; C08G 2261/17; C08G 2261/18; C08G 2261/224; C08G 2261/312;

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fundación IMDEA Energía**
**28935 Móstoles (Madrid) (ES)**

(72) Inventors:
- **LIRAS TORRENTE, Marta**
  **E-28935 Móstoles, Madrid (ES)**
- **NARANJO SÁNCHEZ, Teresa**
  **E-28935 Móstoles, Madrid (ES)**
- **PALENZUELA REBELLA, Sandra**
  **E-28935 Móstoles, Madrid (ES)**
- **BARAWI MORÁN, Mariam**
  **E-28935 Móstoles, Madrid (ES)**
- **DE LA PEÑA O´SHEA, Victor A.**
  **E-28935 Móstoles, Madrid (ES)**

(74) Representative: **ABG Intellectual Property Law, S.L.**
**Avenida de Burgos, 16D**
**Edificio Euromor**
**28036 Madrid (ES)**

# (54) METHOD FOR PREPARING CONJUGATE POROUS POLYMERS AND USES THEREOF

(57) This invention provides a polymerization method, which yields nanostructured conjugate porous polymers. By applying in a successive manner ultrasound tip conditions and microfluidic techniques to water-organic solvent mixtures in presence of a surfactant, emulsions containing nanomicelles are formed. The polymerization occurs via metal-catalyzed cross-coupling reactions, condensation reactions or light-mediated free-radical reactions and leads to nanostructured conjugate porous polymers with reduced average particle size and narrow particle size dispersity. Such polymers are easy to process, thus, they can be used in a variety of applications, including the synthesis of hybrid organic-inorganic materials as well as in photocatalysis and in the production of thin films.

(52) Cooperative Patent Classification (CPC): (Cont.)
C08G 2261/316; C08G 2261/3162;
C08G 2261/3223; C08G 2261/3241;
C08G 2261/3244; C08G 2261/3328;
C08G 2261/3422; C08G 2261/40;
C08G 2261/415; C08G 2261/61; C08G 2261/76

## Description

### FIELD OF THE INVENTION

This invention relates to a polymerization method, which exploits metal-catalyzed cross-coupling reactions, condensation reactions or free-radical reactions mediated by light within nanomicelles obtained by successive use of ultrasound tip conditions and microfluidic techniques to yield nanostructured conjugate porous polymers with reduced average particle size and narrow particle size dispersity. The invention also relates to the conjugate porous polymers obtainable by said method and hybrid organic-inorganic materials comprising said conjugate porous polymers as well as their application in the field of photocatalysis and in the production of thin films.

### BACKGROUND

World energy demand is continuously growing due to the increasing population, making necessary the appearance of new and more competitive technologies. In this scenario, the European Commission aims to accelerate the development and deployment of low-carbon technologies through The European Strategic Energy Technology Plan (SET-Plan). One focus area in the Materials Roadmap from SET-Plan is dedicated to the discovery of novel materials solutions or the development of novel combinations of materials.

One flourishing research area focuses on the discovery of new materials or combination of materials that may accelerate the development and deployment of low carbon technologies. In this context, Conjugated Porous Polymers (CPPs) have been proving suitable candidates for energy applications during the last decade. CPP may be amorphous polymers or crystalline frameworks (also named Covalent Organic Frameworks, COFs). Due to their remarkable properties such as high micro- and meso-porosity, light harvesting, high conductivity and great thermal, chemical and photo stability, these materials can be applied to a wide range of applications such as gas storage, catalysis, and optoelectronics, among others (U. Diaz et al. Coord. Chem Rev. 2016, 311, 85; H. Bildirir, Mater Horizon, 2017, 4, 546). However, one drawback commonly found in CCPs applications relates to their morphology, namely to the large particles which they are composed of. For this reason, CCPs display difficulties in their processability for coatings fabrication and this technical obstacle is also a bottleneck in their implementation at industrial scale. Usually, CPPs are synthesized as bulk powder formed by large particles which are insoluble in both aqueous and organic solvents. Additionally, CPPs display a wide range of particle size distribution (usually from the micrometer to the millimeter range) making difficult the handling, the preparation of stable dispersions and, thus, the preparation of thin films and homogenous coatings. The use of other synthetic alternatives, such as miniemulsion or electropolymerization procedures, leads to decrease of particle size and control of the film thickness, respectively. On one hand, the miniemulsion procedures afford low reproducibility and large particle size dispersity. Meanwhile, electropolymerization techniques rely on the use of a limited number of heteroaromatic monomers (carbazole and thiophene ends groups, among others) that restricts to a great extent the chemical, textural and structural versatility of these materials (carbazoles: Gu, C. et al. Adv. Mater. 2013, 3443; Gu, C. et al. Angew. Chem., Int. Ed. 2015, 54, 11540; Gu, C et al. Angew. Chem., Int. Ed. 2016, 55, 3049; thiophenes: Gu, C. et al. Angew. Chem., Int. Ed. 2015, 54, 13594). The scale-up and commercialization of CPPs based on thiophene and carbazole derivatives is thus not industrially viable to date.

Some candidates of interest for CCPs applications are complex-based dyes dipyrromethene $BF_2$, BODIPY (4,4-Difluoro-4-bora-3a,4a-diaza-s-indacene) and its BOPHY analogs (bis(difluoroboro)1,2-bis((1H-pyrrol-2-yl)methylene)hydrazine). BODIPY-based dyes have excellent photophysical properties such as a strong absorption in the UV-Vis, a high fluorescence quantum yield, a low triplet-triplet absorption, high thermo- and photophysical stability, and relative insensitivity to the polarity and pH of its environment. Small modifications in the structure of BODIPY allow to modulate its reactivity, fluorescence, etc. In addition, the photocatalytic activity of the chromophore has been demonstrated both in its molecular form and as forming part of a polymer backbone.

In 2016 Liras et al. described for the first time the synthesis of a CPP containing a BODIPY moiety (CMPBDP) via a palladium-catalyzed Sonogashira C-C coupling (Liras, M.; Iglesias, M.; Sanchez, F. Macromolecules 2016, 49, 1666-1673). In this study, the presence of BODIPY provides the final polymeric material with emitting properties, high thermal stability and a high surface area. Its effectiveness as a photocatalyst was tested in the selective photocatalytic oxidation of sulfides to sulfoxides and improved conversion was observed compared to the use of the molecular BODIPY counterpart. In addition, the CMPBDP-based polymer displayed good recyclability.

A few years later, another dye of great interest, BOPHY, was also applied to the synthesis of CPPs. The structure of BOPHY is related to that of BODIPY and, likewise, displays excellent spectroscopic properties, such as high molar extinction coefficients and fluorescence quantum yields. Unlike BODIPY-based dyes, some BOPHY derivatives with different substituents in the *meso*-position showed instability or a vibrational progression in absorption, leading to an emission spectrum that is not a mirror image of the absorption spectrum, thus said molecules should be classified as fluorophores of great importance.

Recently, C. G. López-Calixto et al. (ACS Catal. 2020, 10, 9804-9812) conducted research on BOPHY-containing CPPs and found out that these are capable of selectively photo-oxidizing a wide range of sulfides to sulfoxides via a radical anion mechanism different from that described for its BODIPY analogs operating via singlet oxygen. In addition, the activity in artificial photosynthesis has been demonstrated, wherein the hydrogen production rate was greater than that obtained with the inorganic semiconductor *par excellence* in this type of reaction, namely $TiO_2$. In this study, it was also found that a CCP-$TiO_2$ hybrid material displayed a synergistic behavior in terms of photocatalytic activity of the organic and inorganic portion by optimization of the polymer weight percentage (10%) while the hydrogen production was 12.8 times higher than that of $TiO_2$ alone as reference.

In photoelectrochemical processes the photoactive material has to be incorporated into a photoelectrode, thus, it requires the processing of the polymers in the form of a thin film. However, the current problem in the art related to CPPs bulk synthesis lies on conventional emulsion polymerization techniques, which do not lead to substantial control on the particle size and dispersity of the resulting nanostructured polymers. The resulting particles from using such techniques are highly polydisperse and insoluble due to their micrometric size (0.2 - 1 $\mu$m). The difficulty in dispersing the particles as colloids and the lack of desirable rheological properties lead to poor processability.

In many cases, the fundamental problems are related to the slow initiation coupled with slow transport of the monomers or an appropriate precursor thereof through the water phase and into the growing polymer particles. In order to circumvent these drawbacks, newer techniques have been devised to achieve better emulsions and faster polymerization rates.

The most common emulsion polymerization technique to date is the so-called "miniemulsion" (for example, see A. Molina et al., New Anthraquinone-Based Conjugated Microporous Polymer Cathode with Ultrahigh Specific Surface Area for High-Performance Lithium-Ion Batteries. Adv. Funct. Mater. 2020, 1908074), which involves the use of a surfactant to generate two immiscible phases and form micelles by stirring. Particularly, a preformed conventional emulsion of monomer(s), surfactant, water and a non-miscible in water organic solvent or mixture of several of them (also named as "oil phase") is treated under high shear conditions with ultrasonic horn to prepare much finer, self-stabilized droplets. The fine droplets become the locus for polymerization, bypassing the need for transport through the water phase. The application of ultrasound conditions further reduces the size of the micelles, due to pressure fluctuations that create turbulence and cause micro-ruptures in said micelles, thereby achieving a low dispersity mini-emulsion.

A second technique for producing fine droplets is the "microemulsion". A microemulsion is a mixture of oil, surfactant, and water that form spontaneously on bringing the three components together. Microemulsions are thermodynamically stable, and their formation is facilitated by the ultralow interfacial tension of these systems, which leads to the formation of extremely small droplets of the dispersed phase, typically in the range of 30-300 nm. This technique is rarely used for controlled polymerization because the amount of surfactant often equals or exceeds the amount of monomer present. A third technique for achieving a controlled emulsion polymerization utilizes a seeding process to initiate the polymerization. A fraction of the monomer is first mixed with initiator, control agent, water and surfactant. This combination is mixed and allowed to react before additional monomer is added. The goal of the first stage is allowing the initiator to form "living" oligomers or "seeds" under conditions where the surfactant-to-monomer ratio is relatively large (i.e., microemulsion). Although this technique has some advantages over the miniemulsion because it does not require a hydrophobe or specialized equipment, it does not solve the fundamental problems associated to the use of controlled polymerization technologies in an emulsion, such as slow initiation or long reaction times.

Thus, in assessing the state-of-art, there is a need for facile and practical emulsion techniques based on controlled polymerization of CPPs for: (1) producing stable emulsions; (2) utilizing conventional surfactants and soap levels; (3) carrying out rapid initiation and propagation; and (4) achieving complete conversion within a reasonably short timeframe. Such techniques would ideally allow to produce CPPs nanoparticles in a scalable, environmentally friendly manner, and with controlled and reproducible particle size dispersity, which would ultimately make CPP nanoparticles suitable for their commercialization.

Therefore, there is a need in the art to develop new synthetic methodologies that improve and facilitate the scale up as well as the processability of nanostructured CPP materials by reducing the particle size to a nanometer range and achieving, at the same time, control over the particle size dispersity.

## BRIEF DESCRIPTION OF THE INVENTION

The inventors have found that the combined use of miniemulsion techniques and high-performance microfluidic technologies surprisingly afforded nanostructured CPPs, not only having smaller particle size but also lower particle size dispersity. The miniemulsion technique is characterized in that the polymerization takes place in the hydrophobic inner environment of a micelle. Usually, the control over nanoparticle size with standard miniemulsion techniques is insufficient. Therefore, one main advance of the present invention lies in the application of high-performance microfluidics technologies to the production of NanoCPPs with a low particle size dispersity which have been elusive in the state-of-art. The aim of the new methodology is the preparation of easy-to-handle colloidal dispersions of nanostructured CPPs along

with the improved processability of the particles, compared to those obtained according to the prior art. At the same time, the photocatalytically active surface is increased and the preparation of thin film needed for the measure of photoelectrochemical properties is more facile. Thus, the present invention may overcome the limitations of conventionally synthetized CPPs, improving the processability of these materials for their industrial production in scale.

Thus, the present invention relates to a method for preparing a conjugated porous polymer in a particulate form, wherein particles have a particle size dispersity ≤0.4 and an average particle size comprised between 1 and 150 nm as measured by Dynamic Light Scattering, said method comprising:

a) preparing a mixture A comprising:

- a catalyst;
- a surfactant;
- a first monomer of formula I-XXIII

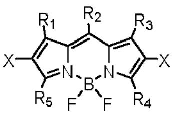
I
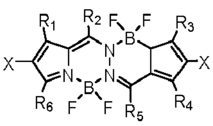
II
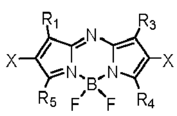
III
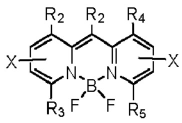
IV
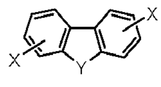
V
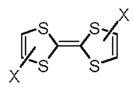
VI
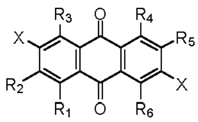
VII
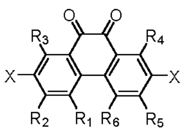
VIII
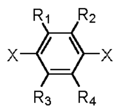
IX
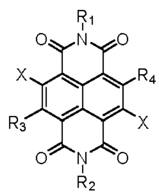
X
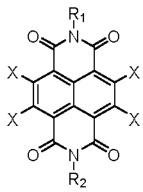
XI
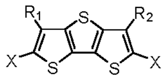
XII
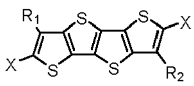
XIII
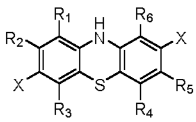
XIV
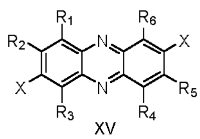
XV
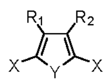
XVI
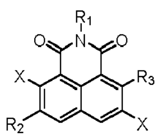
XVII
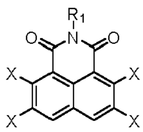
XVIII
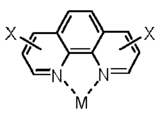
XIX
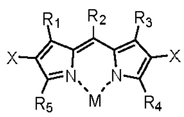
XX
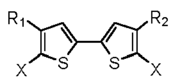
XXI
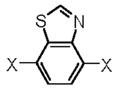
XXII
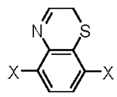
XXIII

and

- a second monomer of formula I'-XI':

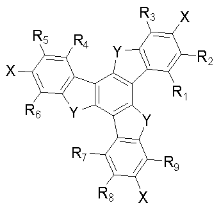
I'

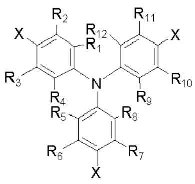
II'

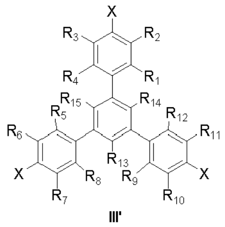
III'

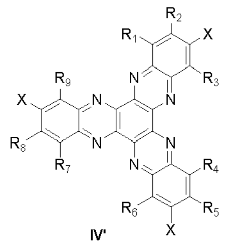
IV'

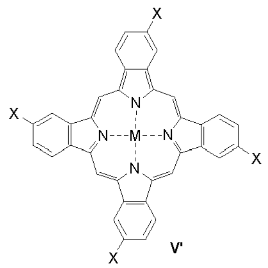
V'

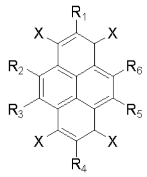
VI'

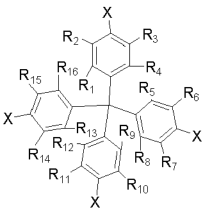
VII'

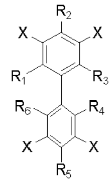
VIII'

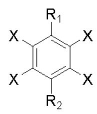
IX'

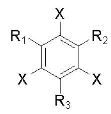
X'

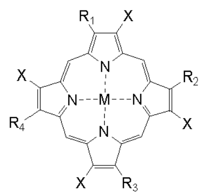
XI'

wherein the groups $R_1$ to $R_{16}$ are independently selected from H, $-OR_{17}$, $-NO_2$, $-NR_{18}R_{19}$, $-SR_{20}$, $-COOR_{21}$, $-SO_3$, $-PO_3$, $-SCOR_{22}$, an optionally substituted $C_{1-4}$alkyl, an optionally substituted aryl $C_{6-10}$, vinyl, ethynyl, $-C{\equiv}C-C_6H_4X'$ or $-C=C-C_6H_4X'$ wherein X' is halogen and $R_{17}$-$R_{22}$ are selected from H, an optionally substituted $C_{1-4}$ alkyl, and an optionally substituted $C_{6-10}$ aryl;

Y is $CY'_2$, O, NY' or S, wherein Y' is independently selected from H, optionally substituted alkyl $C_{1-4}$, and optionally substituted aryl $C_{6-10}$;

M is a divalent or a tetravalent metal;

X is independently selected from halogen, $-C{\equiv}CH$, $-NH_2$, -CHO, $-C{\equiv}C-C_6H_4X'$ and - $C=C-C_6H_4X'$, wherein X' is halogen;

and wherein,

- if X in the first monomer is a halogen, $-C{\equiv}C-C_6H_4X'$ or $-C=C-C_6H_4X'$ wherein X' is halogen, X in the second monomer is:

  i) -C=CH, or

  ii) $-B(OR_a)(OR_b)$, where $R_a$ and $R_b$ are independently selected from H and $C_{1-4}$ alkyl, or $R_a$ and $R_b$ can form a $C_{3-7}$ carbocycle optionally substituted with $C_{1-4}$ alkyl groups; or

  iii) $-Sn(R_c)_3$ where the groups $R_c$ are independently selected from H, optionally substituted alkyl $C_{1-4}$, optionally substituted aryl $C_{6-10}$, vinyl or ethynyl;

- if X in the second monomer is a halogen, $-C{\equiv}C-C_6H_4X'$ or $-C=C-C_6H_4X'$ wherein X' is halogen, X in the first monomer is:

  i) -C=CH, or

  ii) $-B(OR_a)(OR_b)$, where $R_a$ and $R_b$ are independently selected from H and alkyl $C_{1-4}$, or $R_a$ and $R_b$ can form a $C_{3-7}$ carbocycle optionally substituted with $C_{1-4}$ alkyl groups; or

  iii) $-Sn(R_c)_3$ where the groups $R_c$ are independently selected from selected from H, optionally substituted alkyl $C_{1-4}$, optionally substituted aryl $C_{6-10}$, vinyl or ethynyl,;

- if X in the first monomer is $-NH_2$, X in the second monomer is -CHO;
- if X in the first monomer is -CHO, X in the second monomer is $-NH_2$;

or preparing a mixture B comprising:

- a photosensitizer and/or a photoinitiator;
- a surfactant; and
- a monomer of formula I'-XI', wherein

  the groups $R_1$ to $R_{16}$, Y and M are defined as above, and

  X is independently selected from optionally substituted 2-thiophenyl, 2-pyrrolyl, 2-furanyl, N-carbazolyl,

-C≡CZ and -CH=CHZ wherein Z is independently selected from optionally substituted 2-thiophenyl, 2-pyrrolyl, 2-furanyl and N-carbazolyl;

b) stirring the mixture A or B from step a) under ultrasound tip conditions to obtain a homogenous emulsion A or B, respectively, said emulsion containing micromicelles;
c) introducing the emulsion A or B resulting from step b) into a microfluidizer to obtain an emulsion A' or B', respectively, said emulsion containing nanomicelles; and
d) subjecting the emulsion A' to thermal and/or pressure treatment or subjecting the emulsion B' to light irradiation, to obtain the conjugated porous polymer in a particulate form.

A second aspect of the invention relates to a conjugated porous polymer in a particulate form obtainable according to the method of the invention, wherein particles have a particle size dispersity ≤0.4 and an average particle size comprised between 1 and 150 nm as measured by Dynamic Light Scattering.

A third aspect of the invention relates to a hybrid material comprising the conjugated porous polymer in a particulate form obtainable according to the method of the invention and at least one inorganic semiconductor.

Finally, another aspect of the invention relates to the use of the conjugated porous polymer or of the hybrid material comprising a conjugated porous polymer according to the invention as photocatalysts or in the preparation of thin films.

A number of fields such as nanotechnology, energy conversion and storage, biomedicine, etc, may greatly benefit from the method of the present invention. In particular, the present invention may be exploited in the fields of catalysis and energy conversion.

**BRIEF DESCRIPTION OF THE DRAWINGS**

**Figure 1.** Steps followed for the synthesis of nanostructured conjugated porous polymers.

**Figure 2.** Selection of monomers that may be suitable for the method of the present invention where balls, squares and stars represent functional groups as defined throughout the application text and depend on the cross-coupling reaction of choice. Balls, square and stars further refer to bifunctionalized, trifunctionalized and tetrafunctionalized monomers, respectively.

**Figure 3.** Morphological study of nanostructured CMPBDP obtained by the method of the invention: (A) FESEM image at ×12000 magnification (B), histogram distribution of image A, and (C) FESEM image at ×10000 magnification of CMPBDP synthesized by standard miniemulsion processes (included only for comparative purpose).

**Figure 4.** FESEM image of the nanostructured conjugated porous polymer IEP-28 obtained according to the method of the invention.

**Figure 5.** Thin films of CMPBDP on ITOs synthesized by A) bulk conventional techniques, B) miniemulsion technique and C) nanoemulsion techniques (method of the present invention). The morphology of the thin film obtained by the method of the invention is clearly more homogeneous and less rough compared to those obtained according to the prior art.

**Figure 6.** FESEM images of the cross-section of thin films of CMPBDP deposited on ITOs by A) nanoemulsion techniques (NanoCMPBDP, present invention) and B) miniemulsion techniques (prior art).

**Figure 7.** FESEM images of thin films of CMPBDP deposited on ITOs and obtained by A) nanoemulsion techniques (panel B shows the corresponding magnification) and C) miniemulsion techniques (panel D shows the corresponding magnification).

**Figure 8.** Chronoamperometry of CMPBDP polymer synthesized by miniemulsion techniques (grey) and nanoemulsion of the method of the present invention (black) at -0.6 volt. The corresponding magnification images between 1300 and 1600 sec are shown in the squares on the right.

**Figure 9.** Chronoamperometry of CMPBDP polymer synthesized by miniemulsion techniques (grey) and the nanoemulsion of the method of the present invention (black) at 0.2 volt.

**Figure 10.** Accumulative hydrogen production of the hybrid materials based on CMPBDP and $TiO_2$ as benchmarking. CMPBDP_mini10@T10: hybrid material comprising CMPBDP obtained by mini-emulsion techniques. CMPBDP_ultra10@T10: hybrid material comprising CMPBDP obtained by nanoemulsion techniques (present invention). CMPBDP_bulk@T10: hybrid material comprising CMPBDP obtained by bulk conventional techniques.

**Figure** 11. Accumulative hydrogen production of the hybrid materials based on IEP-7 and $TiO_2$ as benchmarking. IEP-7_mini16@T10: hybrid material comprising IEP-7 obtained by mini-emulsion techniques. IEP-7_ultra16@T10: hybrid material comprising IEP-7 obtained by nanoemulsion techniques (present invention). IEP-7_bulk@T10: hybrid material comprising IEP-7 obtained by bulk conventional techniques.

## DETAILED DESCRIPTION OF THE INVENTION

The main aspect of the present invention relies on the use of nanoemulsion techniques for carrying out polymerization reactions, thus obtaining nanostructured conjugated porous polymers with low particle size dispersity (≤0.4) and average particle size in the nanometer range.

The present invention displays substantial differences and advantages compared to the prior art. In order to further reduce the particle size and gain better control on the size and dispersity of the CPPs, a new method has been developed in which an emulsion containing micro-micelles obtained after sonication in presence of a surfactant, by applying an ultrasound tip, is additionally introduced into a microfluidizer equipment (Figure 1). The inventors have found that such synergic synthetic strategy achieves optimal control on the size of the micelles and on their dispersity. The polymerization of appropriate monomers to a conjugated porous polymer takes place inside the uniformly distributed micelles by applying temperature, pressure, light or a combination of any of these stimuli.

A main aspect of the invention is therefore related to a method for preparing a conjugated porous polymer in a particulate form, wherein particles have a particle size dispersity ≤0.4 and an average particle size comprised between 1 and 150 nm as measured by Dynamic Light Scattering, said method comprising:

a) preparing a mixture A comprising:

- a catalyst;
- a surfactant;
- a first monomer of formula **I-XXIII;**

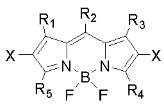
I

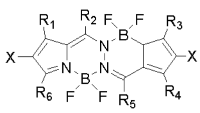
II

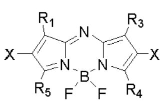
III

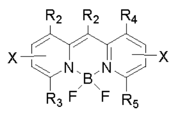
IV

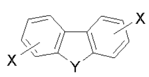
V

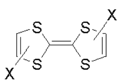
VI

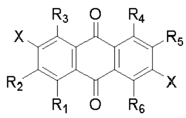
VII

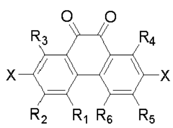
VIII

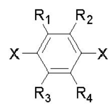
IX

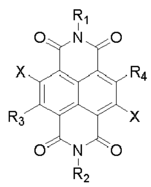
X

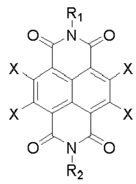
XI

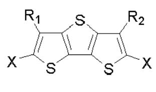
XII

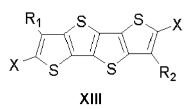
XIII

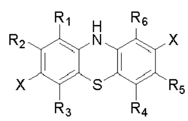
XIV

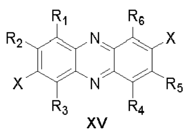
XV

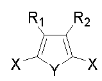
XVI

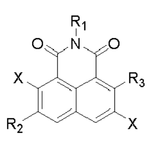
XVII

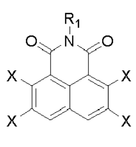
XVIII

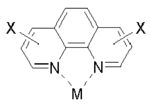
XIX

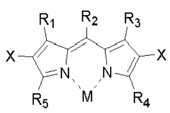
XX

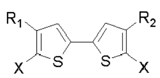
XXI

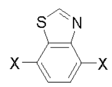
XXII

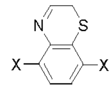
XXIII

and

- a second monomer of formula **I'-XI'**:

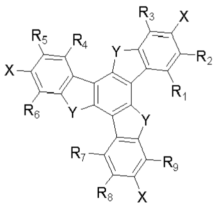

I'

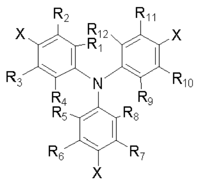

II'

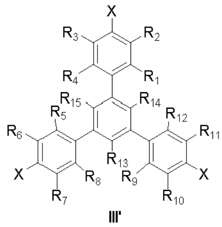

III'

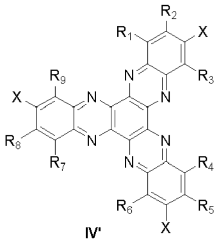

IV'

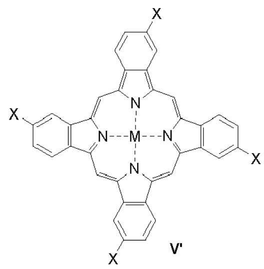

V'

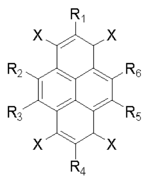

VI'

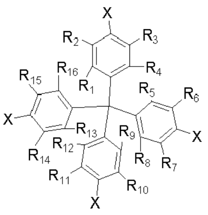

VII'

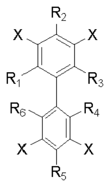

VIII'

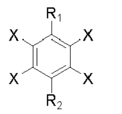

IX'

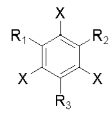

X'

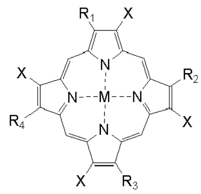

XI'

wherein the groups $R_1$ to $R_{16}$ are independently selected from H, $-OR_{17}$, $-NO_2$, $-NR_{18}R_{19}$, $-SR_{20}$, $-COOR_{21}$, $-SO_3$, $-PO_3$, $-SCOR_{22}$, and optionally substituted $C_{1-4}$ alkyl, optionally substituted aryl $C_{6-10}$, vinyl, ethynyl, or $-C{=}C{-}C_6H_4X'$ wherein X' is halogen and $R_{17}$-$R_{22}$ are selected from H, optionally substituted $C_{1-4}$ alkyl, optionally substituted $C_{6-10}$ aryl;
Y is $CY'_2$, O, NY' or S, wherein Y' is independently selected from H, optionally substituted $C_{1-4}$ alkyl, and optionally substituted $C_{6-10}$ aryl;
M is a divalent or a tetravalent metal;
X is independently selected from halogen, $-C{\equiv}CH$, $-NH_2$, -CHO, $-C{\equiv}C{-}C_6H_4X'$ and - $C{=}C{-}C_6H_4X'$, wherein X' is halogen;

and wherein,

- if X in the first monomer is a halogen, $-C{\equiv}C{-}C_6H_4X'$ or $-C{=}C{-}C_6H_4X'$ wherein X' is halogen, X in the second monomer is:

    i) -C=CH, or
    ii) $-B(OR_a)(OR_b)$, where $R_a$ and $R_b$ are independently selected from H and $C_{1-4}$ alkyl, or $R_a$ and $R_b$ can form a $C_{3-7}$ carbocycle optionally substituted with $C_{1-4}$ alkyl groups; or
    iii) $-Sn(R_c)_3$ where the groups $R_c$ are independently selected from H, optionally substituted $C_{1-4}$ alkyl, optionally substituted $C_{6-10}$ aryl, vinyl or ethynyl;

- if X in the second monomer is a halogen, $-C{\equiv}C{-}C_6H_4X'$ or $-C{=}C{-}C_6H_4X'$ wherein X' is halogen, X in the first monomer is:

    i) -C=CH, or
    ii) $-B(OR_a)(OR_b)$, where $R_a$ and $R_b$ are independently selected from H and $C_{1-4}$ alkyl, or $R_a$ and $R_b$ can form a $C_{3-7}$ carbocycle optionally substituted with $C_{1-4}$ alkyl groups; or
    iii) $-Sn(R_c)_3$ where the groups $R_c$ are independently selected from selected from H, optionally substituted $C_{1-4}$ alkyl, optionally substituted $C_{6-10}$ aryl, vinyl or ethynyl;

- if X in the first monomer is $-NH_2$, X in the second monomer is -CHO;
- if X in the first monomer is -CHO, X in the second monomer is $-NH_2$;
or preparing a mixture B comprising:

    - a photosensitizer and/or a photoinitiator;
    - a surfactant; and
    - a monomer of formula **I'-XI'**, wherein

        the groups $R_1$ to $R_{16}$, Y and M are defined as above, and

X is independently selected from optionally substituted 2-thiophenyl, 2-pyrrolyl, 2-furanyl, N-carbazolyl, -C≡CZ and -CH=CHZ wherein Z is independently selected from optionally substituted 2-thiophenyl, 2-pyrrolyl, 2-furanyl and N-carbazolyl;

b) stirring the mixture A or B from step a) under ultrasound tip conditions to obtain a homogenous emulsion A or B, respectively, said emulsion containing micromicelles;
c) introducing the emulsion A or B resulting from step b) into a microfluidizer to obtain an emulsion A' or B', respectively, said emulsion containing nanomicelles; and
d) subjecting the emulsion A' to thermal and/or pressure treatment or subjecting the emulsion B' to light irradiation, to obtain a conjugated porous polymer in a particulate form.

The polymerization reaction according to the method of the invention may take place via different routes, which are thermal-/pressure-mediated or light-mediated polymerizations.
In the case of the thermal-/pressure-mediated reactions, cross-coupling reactions in presence of a suitable metal catalyst can be applied to the method of the invention. Suzuki, Sonogashira, Heck and Stille C-C cross coupling are examples of suitable reactions that can be applied to the method of the invention, however other cross coupling reactions could be foreseen by a skilled person by appropriately choosing the functional groups that are involved in the cross-coupling process. The polymers obtained by metal catalysis as mentioned earlier are amorphous. In the case of the thermal-/pressure-mediated reactions, the formation of imines and enamines may also lead to controlled polymerization reactions via acidic catalysis yielding conjugated porous polymers that are crystalline in nature, which are also known as Covalent Organic Frameworks (COFs).
In the case of light-mediated polymerizations, a photosensitizer or a photoinitiator is needed to promote the photopolymerization via formation of free-radicals.
It has to be noted that, regardless of the route and stimulus used to promote the polymerization (temperature, pressure or light), the same effect is achieved by carrying out the method of the invention, that is, the provision of a conjugated porous polymer with low particle size dispersity and particle size in the nanometer range.

*Step a)*

In an embodiment, the method of the invention comprises the preparation of a mixture A, said mixture comprising:

- a catalyst;
- a surfactant;
- a first monomer of formula **I-XXIII;** and
- a second monomer of formula **I'-XI'**.

In another embodiment, the method of the invention relates to the preparation of a mixture B comprising:

- a photosensitizer or a photoinitiator;
- a surfactant; and
- a monomer of formula **I'-XI'** as shown in the scheme above.

The first monomer of formula **I-XXIII** and the second monomer of formula **I'-XI'** are depicted in the corresponding schemes throughout the text.

Catalyst

As provided herein, the catalyst comprised in the mixture A may be a transition metal-based catalyst that can, under appropriate conditions, induce a coupling reaction between two different moieties. So, it is also referred herein as a cross-coupling catalyst.
The transition metal atom in a cross coupling catalyst generally can be any suitable transition metal atom for performing oxidative addition, transmetalation, single electron oxidation with a free radical and/or reductive elimination. Such atoms are known to include Ni atoms and Pd atoms, although in some contexts other transition metals may be

effective to induce a coupling reaction. A cross coupling catalyst may include one or more transition metal atoms. In some embodiments, a cross coupling catalyst is a Ni catalyst including a Ni atom. In other embodiments, a cross coupling catalyst is a Pd catalyst including a Pd atom. The transition metal in a cross coupling catalyst also comprises one or more ligands. A person of skill in the art can select an appropriate transition metal and appropriate ligands based on knowledge available and the detailed teachings provided herein. For a discussion of cross coupling catalysts, see Meijere et al., Eds., Metal-Catalyzed Cross coupling Reactions and More (2014, Wiley-VCH); Phan et al., On the Nature of the Active Species in Palladium Catalyzed Mizoroki-Heck and Suzuki-Miyaura Couplings-Homogeneous or Heterogeneous Catalysis, A Critical Review, Advanced Synthesis & Catalysis (2006) Vol. 348, Issue 6, pages 609-679; "Organotransition Metal Chemistry-From Bonding to Catalysis" John Hartwig (University Science Books, 2010).

A catalyst loading should be chosen as to provide a desired polymerization yield. In a preferred embodiment, the catalyst loading is comprised between 0.1 and 10.0 mol%, more preferably between 0.1 and 2 mol% based on the amount of monomer(s). In some embodiments, a cross coupling catalyst can be included in about 0.1 mol %, about 1.0 mol %, about 2.0 mol%, about 3.0 mol %, about 4.0 mol %, about 5.0 mol % or about 10.0 mol % based on amount of monomer(s). As mentioned earlier, Suzuki, Sonogashira and Stille C-C cross coupling are examples of suitable reactions that can be applied to the method of the invention.

A Sonogashira coupling catalyst is a cross coupling catalyst that can, under appropriate conditions, induce a coupling between a terminal alkyne and an aryl or vinyl halide. A person of ordinary skill in the art guided by the teachings provided herein can select a suitable Sonogashira coupling catalyst and determine an effective amount for a particular reaction. See R. Chinchilla, C. Nájera, Chem. Soc. Rev., 2011,40, 5084-5121; R. Chinchilla and C. Nájera, Chem. Rev. 2007, 107, 3, 874-922. Typically, two catalysts are needed for a Sonogashira reaction: a zerovalent palladium complex and a copper(I) halide salt as co-catalyst to increase the rate of the reaction, however copper-free Sonogashira reactions are also known. In an embodiment, the Sonogashira coupling is carried out with a palladium catalyst only. In another embodiment, the Sonogashira coupling is carried out with a palladium catalyst and a copper co-catalyst.

A Suzuki coupling catalyst is a cross coupling catalyst that can, under appropriate conditions, induce a coupling between an organic halide or pseudohalide and a boron-containing organic moiety. A person of ordinary skill in the art guided by the teachings provided herein can select a suitable Suzuki coupling catalyst and determine an effective amount for a particular reaction. See Miyaura et al., Chem. Rev. (1995) vol. 95, 2457-2483; Han, Chem. Soc. Rev. (2013) Vol. 42, 5270-5298.

A Stille coupling catalyst is a cross coupling catalyst that can, under appropriate conditions, induce a coupling between stannanes and halides or pseudohalides. A person of ordinary skill in the art guided by the teachings provided herein can select a suitable Stille coupling catalyst and determine an effective amount for a particular reaction. See C. Cordovilla et al., ACS Catal. 2015, 5, 5, 3040-3053 and references cited therein.

A person of ordinary skill in the art could easily employ other types of cross-coupling reactions, such as Negishi and Heck reactions by carefully choosing the proper starting materials and experimental conditions.

In a preferred embodiment, the catalyst is a palladium catalyst. The Pd atom can be ligated by one or more of a halide, a sulfonate, a carboxylate, a phosphine, an imine, an aromatized N (e.g., pyridine), an alkene, an amine, a nitrile, a carbanion or a carbene. A Pd catalyst can include a Pd(O) atom. In further variations, a Pd catalyst can include a Pd(II) atom. In an embodiment, a Pd atom can be ligated by a bidentate moiety. In some further variations, a Pd atom can be ligated by a tridentate moiety. In a more preferred embodiment, the palladium catalyst is tetrakis(triphenylphosphine) palladium(0).

In a preferred embodiment, the palladium catalyst is used in combination with a co-catalyst in a Sonogashira reaction. While Sonogashira reactions are usually carried out in presence of a palladium catalyst and a copper co-catalyst, copper-free Sonogashira reactions are also known and a skilled person would know when a co-catalyst is or is not required.

The catalyst comprised in the mixture A may also be an acid catalyst, that promotes the formation of imines or enamines from the successive condensation of -CHO and $-NH_2$ groups with elimination of water. In an embodiment the catalyst is an acid catalyst. Examples of acid catalysts include organic protic catalysts such as acetic acid, trifluoroacetic acid, trifluoromethanesulfonic acid (TfOH) or aprotic acidic Lewis catalysts such as boron trifluoride-diethyl ether complex, $TiO_2$, $CeCl_3 \cdot H_2O$, $Cu(NO_3)_2$, $Er(OTf)_3$, $P_2O_5$/ $Al_2O_3$, $P_2O_5/SiO_2$, $NaHSO_4 \cdot SiO_2$, $Mg(ClO_4)_2$, molecular sieves, $TiCl_4$, $MgSO_4$-pyridinium p-toluenesulfonate, $ZnCl_2$, alumina, $Ti(OR)_4$ (wherein R is an alkyl group as defined throughout the application text), $CuSO_4$, and montmorillonite K-10 clay. In a preferred embodiment, the catalyst comprised in the mixture A is an acid catalyst. In a more preferred embodiment, the acid catalyst comprised in the mixture A is TFA or AcOH.

## Photoinitiator and photosensitizer

The mixture B provided in step a) of the process of the invention comprises a photoinitiator and/or a photosensitizer. Photoinitiators and photosensitizers are used in photopolymerization reactions, where light is used to initiate the polymerization process.

By the term "photoinitiator" it is widely known a molecule which, upon UV irradiation, absorbs light and is converted in an activated form which rapidly disintegrate into radicals or ions. These molecule fragments then initiate polymerization and/or crosslinking reactions in a subsequent step. Light-induced polymerization reactions usually depend on the wavelength and spectral distribution of the light source.

The term "photosensitizer" refers to a molecule which, upon light irradiation, absorbs light and is converted in an activated form which transfers its energy directly to an energy acceptor molecule which then produces radicals by either hydrogen abstraction or by photocleavage.

In an embodiment, the mixture B comprises a photoinitiator.

In a particular embodiment, the photoinitiator is a diaryliodonium salt. In a preferred embodiment, the anion of said salt includes chloride, bromide, tetrafluoroborate, hexafluorophosphate, hexafluoroarsenate, hexafluoroantimonate or trifluoromethane sulfonate. In another preferred embodiment, the diaryl moiety can be bis(p-chlorophenyl), ditolyl, bis(p-tert-butylphenyl), bis(m-nitrophenyl), p-tert-butylphenyl, methoxyphenyl phenyliodonium, or the like. In a more preferred embodiment, the diaryliodonium salt is diphenyliodonium hexafluorophosphate.

In another embodiment, the mixture B comprises a photosensitizer.

Several photosensitizers can be used, such as organic compounds, including porphyrins, hematoporphyrin derivative (HpD), chlorins, BODIPY, benzophenones, methylene blue or rose Bengal. Other photosensitizers that can be used are organometallic complexes based on precious metals, in particular iridium, ruthenium, and rhodium complexes. Such complexes display favorable and well-understood photochemical and electron transfer properties: efficient light absorption in the visible region of the spectrum via metal-to-ligand charge transfer (MLCT) from an electron rich metal center to a $\pi$ accepting ligand; facile intersystem crossing (ISC) to a long-lived excited state due to strong spin-orbit coupling in second- or third-row metals; reversible outer-sphere electron transfer in both excited state and ground state.

Known examples of metal complexes that may act as photosensitizers are $[Ru(bpy)_3]^{2+}$ (bpy = 2,2'-bipyridine), $[Ir(ppy)_3]$ (ppy = 2-phenylpyridine), and $[ReCl(CO)_3(bpy)]$. Other MLCT photosensitizers avoiding the use of precious metals comprises isocyanide complexes of Cr(0), Mo(0), and W(0).

In another embodiment, the mixture B comprises a photoinitiator and a photosensitizer.

In an embodiment, the photoinitiator to monomer molar ratio ranges from 1:5 to 1:1000. More preferably, the photoinitiator to monomer molar ratio ranges from 1:5 to 1:500. Even more preferably, the photoinitiator to monomer molar ratio ranges from 1:5 to 1:100. In a preferred embodiment, the photoinitiator to monomer molar ratio is about 1:10.

In another embodiment, the photosensitizer to monomer molar ratio ranges from 1:5 to 1:1000. More preferably, the photosensitizer to monomer molar ratio ranges from 1:5 to 1:500. Even more preferably, the photosensitizer to monomer molar ratio ranges from 1:5 to 1:100.

## Surfactants

Mixtures A and B provided in step a) of the process of the invention comprises a surfactant. As it is widely known, a surfactant includes any compound or mixture of compounds capable of stabilizing colloidal aqueous emulsions, generally amphiphilic molecules that reduce the surface tension of liquids, or reduce interfacial tension between two liquids or a liquid and a solid. The surfactants to be used in the mixtures A and B may be small molecules or polymers, micelle-forming or non-micelle- forming, and may be anionic, cationic, zwitterionic or nonionic. In an embodiment of the present invention, mixtures of surfactants are used.

A broad range of suitable surfactants is described in McCutcheon's Emulsifiers and Detergents Handbook (McCutcheon Division, Manufacturing Confectioner Publishing Co, Glen Rock, NJ, 1999).

Suitable anionic surfactants include substituted or unsubstituted hydrocarbyl sulfates, sulfonates, carboxylates, phosphonates and phosphates having between 6 and 30 carbon atoms per anionic functional group.

Suitable cationic surfactants include substituted or unsubstituted hydrocarbyl ammonium salts having between 6 and 30 carbon atoms per cationic functional group.

Suitable nonionic surfactants include amphiphilic amides having between 6 and 30 carbon atoms for each hydrocarboyl group and between 2 and 30 carbon atoms for each hydrocarbyl amine group. In some embodiments, useful surfactants include, for example, alkali metal and ammonium salts of: (i) alkylsulfates (alkyl radical: C8 to C18); (ii) alkylarylsulfonic acids (alkyl radical: C8 to C18); (iii) alkanesulfonic acids (alkyl radical: C8 to C18); (iv) succinate half-amides of alkylamines (alkyl radical: C8 to C18); (v) succinate half-esters of alkanols (alkyl radical: C8 to C18); (vi) alkanoic acids (alkyl radical: C8 to C18); (vii) alkylphosphates (alkyl radical: C1 to C18); (viii) alkylphosphonates (alkyl radical: C1 to C18); (ix) acylated sarcosine and taurine (acyl radical C8 to C18); and (x) sulfosuccinic acid diesters and diamides (alkyl radical: C4 to C18).

In a preferred embodiment, the surfactant is a quaternary ammonium salt selected from the group consisting of benzalkonium halide, lauralkonium halide, cetrimide, hexadecyltrimethylammonium halide, tetradecyltrimethylammonium halide, dodecyltrimethylammonium halide, cetrimonium halide, benzethonium halide, behenalkonium halide, cetalkonium halide, cetethyldimonium halide, cetylpyridinium halide, benzododecinium halide, chlorallyl methenamine halide, myristalkonium halide, stearalkonium halide and a mixture of two or more thereof. The halides are preferably chloride or bromide. In a more preferred embodiment, the surfactant is hexadecyltrimethylammonium halide, more preferably the surfactant is hexadecyltrimethylammonium bromide.

For each surfactant, one or more hydrogen or carbon atom from hydrocarbyl groups may be replaced with another atom selected from the group consisting of N, S, O, Si, F, Cl, Br and I. The hydrocarbyl may also have one or more hydrogen or carbon atom replaced with a functionality such as a keto, ester, amide, ether, thioether, hydroxyl and the like, and the hydrocarbyl may be part of a ring structure.

In some embodiments, the surfactant may be produced by an acid/base neutralization reaction at the monomer/water interface. For some types of anionic surfactants, this may be accomplished, for example, via reaction of a monomer-soluble acid with an aqueous base. Suitable monomer-soluble acids include, for example, palmitic acid, oleic acid, dodecylbenzene sulfonic acid, lauryl sulfate, hexadecylsulfonic acid, dihexadecylphosphonic acid, hexadecylsuccinate half ester, and the monohexadecylamide of succinic acid. Suitable bases include, for example, hydroxides, carbonates and bicarbonates of alkali metal ions and quaternary ammonium ions, substituted and unsubstituted amines, and basic nitrogen-containing heterocycles. It will be evident to those skilled in the art that any aqueous base with a pK less than about the pKa of the monomer-soluble acid also may be suitable. It also will be evident that hydroxides generated in-situ via hydrolysis of moisture-sensitive compounds, such as sodium methoxide, sodium amide, potassium hydride and the like, may be also suitable as surfactants.

Those skilled in the art typically consider a number of factors when selecting the appropriate surfactant(s) for mixtures A and B.

The surfactant to monomer ratio may be expressed as molar ratio. The surfactant to monomer ratio (the monomer as limiting reagent) is typically in the range from about 0. 01:1 to about 10:1, more preferably in the range from about 0.05:1 to about 5: 1, and most preferably is about 2:1.

The weight percentage of surfactant with respect to the total weight of the mixture A or B may be comprised between 0.1 wt% and 10 wt%. More preferably, the weight percentage of surfactant with respect to the total weight of the mixture A or B is comprised between 0.5 wt% and 5 wt%.Even more preferably, the weight percentage of surfactant with respect to the total weight of the mixture A or B is about 1 wt%.

## Monomers

The method of the invention provides a vast number of polymers that can be designed by tailoring the precursor monomer units as well as the nature of the spacers between them. The selection will depend on the type of application of the resulting polymeric networks (CPPs and COFs).

The monomers used for CPPs and COFs synthesis by the method of the invention via catalytic polymerization require to be functionalized with those groups capable of engaging in cross coupling reactions, such as halogen, alkyne, boronic acid or ester, organotin, etc.; or condensation reactions, such as $NH_2$ and CHO, respectively.

Meanwhile, the building blocks used for CPPs synthesis by to the method of the invention via photopolymerization are typically heteroaromatic-containing monomers such as 2-thiophenyl, 2-pyrrolyl, 2-furanyl and N-carbazolyl.

In the mixture A, a first monomer of formula **I-XXIII** and a second monomer of formula **I'-X1'** as defined above are used to carry out the method of the invention. These monomers contain various substituents such as the groups $R_1$ to $R_{16}$, Y, M and X as defined above.

$R_1$ to $R_{16}$ are independently selected from H, $-OR_{17}$, $-NO_2$, $-NR_{18}R_{19}$, $-SR_{20}$, $-COOR_{21}$, $-SO_3$, $-PO_3$, $-SCOR_{22}$, optionally substituted $C_{1-4}$ alkyl, optionally substituted $C_{6-10}$ aryl, vinyl, ethynyl, $-C{\equiv}C-C_6H_4X'$ and $-C{=}C-C_6H_4X'$ wherein X' is halogen and $R_{17}$-$R_{22}$ are selected from H, optionally substituted $C_{1-4}$ alkyl and optionally substituted $C_{6-10}$ aryl;

Y is $CY'_2$, O, NY' or S, wherein Y' is independently selected from H, optionally substituted $C_{1-4}$ alkyl, and optionally substituted $C_{6-10}$ aryl;

M is a divalent or a tetravalent metal;

X is independently selected from halogen, -C=CH, $-NH_2$, -CHO, $-C{\equiv}C-C_6H_4X'$ and $-C{=}C-C_6H_4X'$ wherein X' is halogen;

and wherein,

- if X in the first monomer is a halogen, $-C{\equiv}C-C_6H_4X'$ or $-C{=}C-C_6H_4X'$ wherein X' is halogen, X in the second monomer is:

  i) -C=CH, or

  ii) $-B(OR_a)(OR_b)$, where $R_a$ and $R_b$ are independently selected from H and $C_{1-4}$ alkyl, or $R_a$ and $R_b$ can

form a $C_{3-7}$ carbocycle optionally substituted with $C_{1-4}$ alkyl groups; or
iii) $-Sn(R_c)_3$ where the groups $R_c$ are independently selected from H, optionally substituted $C_{1-4}$ alkyl, optionally substituted aryl $C_{6-10}$, vinyl or ethynyl;

- if X in the second monomer is a halogen, $-C\equiv C-C_6H_4X'$ or $-C=C-C_6H_4X'$ wherein X' is halogen, X in the first monomer is:

  i) -C=CH, or
  ii) $-B(OR_a)(OR_b)$, where $R_a$ and $R_b$ are independently selected from H and $C_{1-4}$ alkyl, or $R_a$ and $R_b$ can form a $C_{3-7}$ carbocycle optionally substituted with $C_{1-4}$ alkyl groups; or
  iii) $-Sn(R_c)_3$ where the groups $R_c$ are independently selected from selected from H, optionally substituted $C_{1-4}$ alkyl, optionally substituted $C_{6-10}$ aryl, vinyl or ethynyl;

- if X in the first monomer is $-NH_2$, X in the second monomer is -CHO;
- if X in the first monomer is -CHO, X in the second monomer is $-NH_2$.

The term "alkyl" refers to a linear or branched alkane derivative containing from 1 to 4 ("$C_{1-4}$alkyl") carbon atoms and which is bound to the rest of the molecule through a single bond. Illustrative examples of alkyl groups include methyl, ethyl, n-propyl, i-propyl, n-butyl, i-butyl, t-butyl. In one embodiment, the alkyl group is unsubstituted, it only contains C and H atoms. The alkyl group may be optionally substituted with other atoms and/or functional groups, meaning that the H atoms at the alkyl chain are partially or completely substituted by halogens, CN, $OC_{1-4}$ alkyl, $NO_2$, CHO, $C(O)(C_{1-4}$ alkyl), $COO(C_{1-4}$ alkyl), phenyl.

The term "halogen" refers to fluorine (F), chlorine (Cl), bromine (Br), iodine (I) substituents. Preferably the halogen is Cl, Br or I.

The term "$C_{6-10}$ aryl" refers to an aromatic group having between 6 and 10, preferably 6 or 10 carbon atoms, comprising 1 or 2 aromatic nuclei fused to one another. Illustrative examples of aryl groups include phenyl, naphthyl and indenyl. Preferably, it is phenyl. In one embodiment, the aromatic group of the $C_{6-10}$ aryl is unsubstituted, namely it only contains C and H atoms. The $C_{6-10}$ aryl may be optionally substituted with other atoms and/or functional groups, meaning that the H atoms at the aromatic ring(s) are partially or completely substituted by halogens, $C_{1-4}$ alkyl, CN, $C_{1-4}$ alkyl, $NO_2$, CHO, $C(O)(C_{1-4}$ alkyl), $COO(C_{1-4}$ alkyl), phenyl.

The groups $R_1$ to $R_{16}$ in the first and second monomer may be neutral groups or electrically charged groups. In an embodiment, the groups $R_1$ to $R_{16}$ may be anionic groups such as $-SO_3$ and $-PO_3$. In a preferred embodiment, the groups $R_1$ to $R_{16}$ are neutral groups that are independently selected from H, $-OR_{17}$, $-NO_2$, $-NR_{18}R_{19}$, $-SR_{20}$, $-COOR_{21}$, $-SCOR_{22}$, optionally substituted $C_{1-4}$ alkyl, optionally substituted $C_{6-10}$ aryl, vinyl, ethynyl, $-C\equiv C-C_6H_4X'$ and $-C=C-C_6H_4X'$ wherein X' is halogen and $R_{17}$-$R_{22}$ are selected from H, optionally substituted alkyl $C_{1-4}$, and optionally substituted $C_{6-10}$ aryl. Preferably, the groups $R_1$ to $R_{16}$ are independently selected from -H, $-OR_{17}$, $-NR_{18}R_{19}$, $-SR_{20}$, $-COOR_{21}$, optionally substituted $C_{1-4}$ alkyl, optionally substituted $C_{6-10}$ aryl, vinyl, ethynyl, $-C\equiv C-C_6H_4X'$ and $-C=C-C_6H_4X'$ wherein X' is halogen and $R_{17}$-$R_{21}$ are selected from H, optionally substituted $C_{1-4}$ alkyl, and optionally substituted $C_{6-10}$ aryl.

In another embodiment, the groups $R_1$ to $R_{16}$ are independently selected from -H, $-OR_{17}$, $-NR_{18}R_{19}$, $-SR_{20}$, $-COOR_{21}$, optionally substituted $C_{1-4}$ alkyl or optionally substituted $C_{6-10}$ aryl, wherein $R_{17}$-$R_{21}$ are optionally substituted $C_{1-4}$ alkyl groups.

In a preferred embodiment, the groups $R_1$ to $R_{16}$ are independently selected from H and optionally substituted $C_{1-4}$ alkyl. In a more preferred embodiment, the groups $R_1$ to $R_{16}$ are H or $C_{1-4}$ alkyl groups. Even more preferably, the groups $R_1$ to $R_{16}$ are H or methyl groups.

The group Y in the first and second monomer is $CY'_2$, O, NY' or S, wherein Y' is independently selected from H, optionally substituted $C_{1-4}$ alkyl, and optionally substituted $C_{6-10}$ aryl. Preferably Y is selected from $CY'_2$, O, NY' (Y' is defined as above). Even more preferably, Y is $CY'_2$ (Y' is defined as above).

The group M in the first and second monomer is selected from the group consisting of divalent and tetravalent metals. Divalent and tetravalent metals are alkaline-earth metals or transition metals that are di- or tetra-coordinated with appropriate ligands having suitable donor atoms such as nitrogen. In a particular embodiment, M is selected from the group consisting of Be, Mg, Ca, Sr, Ba, Ni, Co Fe, Cu, Ag, Au, Zn, Cd, Sn Re, Pt , Pd, Ru, Rh , Ru, V, Cr, Mn, Mo and Ir. In a preferred embodiment M is selected from the group consisting of Mg, Ca, Ni, Co, Fe, Cu, Zn.

In another embodiment, X in the first monomer is $NH_2$ and in the second monomer is CHO, or viceversa.

In the mixture B, a monomer of formula **I'-XI'** is used. The groups $R_1$ to $R_{16}$, Y and M correspond to those defined herein above for the first and second monomers of formula **I-XXIII** and **I'-XI'**. The group X in the monomer of formula **I'-XI'** is independently selected from optionally substituted 2-thiophenyl, 2-pyrrolyl, 2-furanyl, N-carbazolyl, -C=CZ and -CH=CHZ wherein Z is independently selected from optionally substituted 2-thiophenyl, 2-pyrrolyl, 2-furanyl and N-carbazolyl. In a particular embodiment, X is selected from the following moieties:

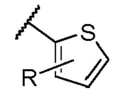 , 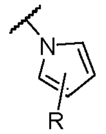 , 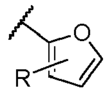 , 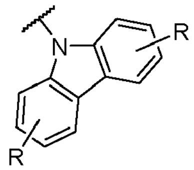

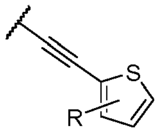 , 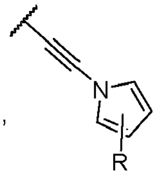 , 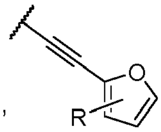 , 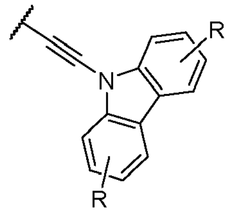

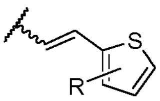 , 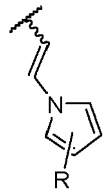 , 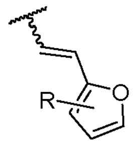 or 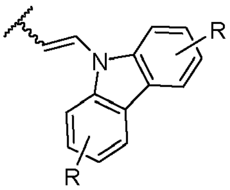

wherein R is independently selected from H, halogen, $C_{1-4}$ alkyl, CN, $NO_2$, CHO, C(O)($C_{1-4}$ alkyl), COO($C_{1-4}$ alkyl) and $C_{6-10}$ aryl. In the case of the -CH=CHZ group, the double bond may be in a (Z)- or (E)-configuration. In one embodiment, the double bond is in a (Z)-configuration, meaning that that two olefinic hydrogen atoms are on the same side of the double bond. In another embodiment, the double bond is in a (E)-configuration, meaning that that two olefinic hydrogen atoms are on the opposite side of the double bond.

The photopolymerization usually occurs at the free 2-position of the 2-thiophenyl, 2-pyrrolyl and 2-furanyl groups and at the 2- or 3-position of the N-carbazolyl group, therefore optional R substituents at the heteroaromatic ring are preferably found at the position 3 of the 2-thiophenyl, 2-pyrrolyl and 2-furanyl group and at the positions 1 and 4 of the N-carbazolyl group.

In a particular embodiment, the first monomer used to prepare the mixture A is selected from the structures **I-IV.** In a more particular embodiment, the first monomer is selected from the structures **I** and **II.** Preferably, the first monomer is selected from the structures **I** and **II,** wherein the groups $R_1$-$R_6$ are $C_{1-4}$ alkyl and the group X is halogen. Even more preferably, the first monomer is selected from the structures **I** and **II,** wherein the groups $R_1$-$R_6$ are methyl and the group X is iodide.

In a particular embodiment, the second monomer used to prepare the mixture A is selected from the structures **I'-IV'** and **X'.** In a more preferred embodiment, the second monomer used to prepare the mixture A is **X'.** In a more preferred embodiment, the second monomer used to prepare the mixture A is **X',** wherein the groups $R_1$-$R_{12}$ are independently selected from H and $C_{1-4}$ alkyl, and the group X is -C≡CH. Even more preferably, the second monomer used to prepare the mixture A is **X',** wherein the groups $R_1$-$R_{12}$ are H and the group X is -C≡CH.

In another embodiment, the monomer used to prepare the mixture B is selected from the structures **I'-IV'** and **X'.** In a preferred embodiment, the second monomer used to prepare the mixture B is **II'**. In a more preferred embodiment, the second monomer used to prepare the mixture B is **II',** wherein the groups $R_1$-$R_{12}$ are independently selected from H and $C_{1-4}$ alkyl, and the group X is - C=CZ, wherein Z is defined above. Even more preferably, the second monomer used to prepare the mixture B is **II',** wherein the groups $R_1$-$R_{12}$ are H and the group X is -C=CZ, wherein Z is 2-thiophenyl.

The mixtures A or B are prepared by mixing the individual components, i.e. i) first monomer, ii) second monomer, iii) surfactant and iv) catalyst or i) monomer, ii) surfactant, and iii) photosensitizer and/or photoinitiator, respectively. The components of the mixture A and B can mixed as neat liquids and/or solids or, alternatively, they are dissolved in an appropriate solvent. Preferably, a solvent or a mixture of solvents is used to form a homogeneous solution of the components before subjecting the mixture A or B to further steps. A skilled person would know how to choose an appropriate solvent depending on the nature of the individual components of the mixture A or B.

In an embodiment, the individual components are mixed in any order.

In a particular embodiment, the first and second monomer and the catalyst are first dissolved in a solvent or mixture of solvents and added to an aqueous solution of the surfactant to form the mixture A. Preferably, the addition is performed while stirring the aqueous solution of the surfactant.

In a particular embodiment, the monomer, and the photoinitiator and/or photosensitizer are dissolved in a solvent or mixture of solvents and added to an aqueous solution of the surfactant to form the mixture B. Preferably, the

addition is performed while stirring the aqueous solution of the surfactant.

In a particular embodiment, the method for preparing a conjugated porous polymer comprises a step

a) comprising:

preparing a mixture A comprising:

- a palladium or a nickel catalyst;
- a quaternary ammonium salt surfactant;
- a first monomer of formula **I-IV;** and
- a second monomer of formula **I'-IV'** or **X'**
  wherein the groups $R_1$-$R_{15}$, Y, and M are defined above and wherein the group X in the first monomer is a halogen while the group X in the second monomer is:

  i) -C=CH, or
  ii) -B($OR_a$)($OR_b$), where $R_a$ and $R_b$ are independently selected from H and alkyl $C_{1-4}$, or $R_a$ and $R_b$ can form a $C_{3-7}$ carbocycle optionally substituted with $C_{1-4}$ alkyl groups; or
  iii) -Sn($R_c$)$_3$ where the groups $R_c$ are independently selected from H, optionally substituted alkyl $C_{1-4}$, optionally substituted aryl $C_{6-10}$, vinyl or ethynyl;

or preparing a mixture B comprising:

- a diaryliodonium salt photoinitiator
- a quaternary ammonium salt surfactant; and
- a monomer of formula **I'-IV'** and **X',**

  wherein the groups $R_1$ to $R_{16}$, Y and M are defined as above, and
  X is independently selected from optionally substituted 2-thiophenyl and -C≡CZ, wherein
  Z is independently selected from optionally substituted 2-thiophenyl, 2-pyrrolyl, 2-furanyl and N-carbazolyl.

In a more preferred embodiment, the method for preparing a conjugated porous polymer comprises a step a) comprising:

preparing a mixture A comprising:

- a palladium catalyst;
- a hexadecyltrimethylammonium halide as surfactant;
- a first monomer of formula **I** or **II**; and
- a second monomer of formula **X',**
  wherein the groups $R_1$-$R_{12}$ are independently selected from H and optionally substituted alkyl $C_{1-4}$, and wherein the group X in the first monomer is a halogen while the group X in the second monomer is -C=CH;

or preparing a mixture B comprising:

- a diaryliodonium salt photoinitiator
- a hexadecyltrimethylammonium halide as surfactant; and
- a monomer of formula **II**',

  wherein the groups $R_1$-$R_{12}$ are independently selected from H and optionally substituted alkyl $C_{1-4}$, and the group X is independently selected from optionally substituted -C≡CZ, wherein Z is an optionally substituted 2-thiophenyl.

In an embodiment, the method for preparing a conjugated porous polymer comprises a step a) comprising preparing a mixture A according to all the specific embodiments described throughout the text.

In another embodiment, the method for preparing a conjugated porous polymer comprises a step a) comprising preparing a mixture B according to all the specific embodiments described throughout the text.

Steps b)-c)

The method of the present invention further comprises stirring the mixture A or B resulting from step a) under ultrasound tip conditions so an emulsion A or B, respectively, having micromicelles is formed. The ultrasound tip equipment used in the present invention can be a Hielscher ultrasonic processor UP400S which is suitable for sonicating large samples in the laboratory and for homogenization and deagglomeration of samples, however other equipments might be appropriate. The so-formed micromicelles feature a smaller particle size than in absence of ultrasound conditions (that would rather lead to micelles with a particle size > 1 μm); the mean particle size may range from 0.2 μm to 1 μm, as measured by Dynamic Light Scattering (DLS). In a particular embodiment, the mixture A or the mixture B are sonicated with an ultrasound probe until an as homogeneous as possible emulsion of micromicelles is obtained. The time needed for the homogenization may vary depending on the components of the mixture. Typically, the mixture A or B may be sonicated for up to 30 minutes. In an embodiment, the mixture A or B is sonicated at 80% of amplitude.
In an embodiment, the sonication is performed after preparing the mixture A or B. In another embodiment, the sonication is performed while preparing the mixture A or B from step a) as described above.
In a subsequent step (c), the emulsion A or B obtained from the sonication of the mixture A or B from step b), respectively, is introduced into a microfluidizer equipment to obtain an emulsion A' or an emulsion B', respectively, wherein nanomicelles are formed and homogeneously distributed therein. Several microfluidizer setups are known in the art and are usually commercially available. In a particular embodiment of the present invention, a microfluidizer processor contains an intensifier pump designed to supply the desired pressure at a constant rate to the product stream. As the pump travels through its pressure stroke, it drives the product at constant pressure through the precisely defined fixed-geometry microchannel within the Interaction Chamber. As a result, the product stream accelerates to high velocities, creating shear rates within the product stream that are orders of magnitude greater than any other conventional means. All of the product experiences identical processing conditions, producing the desired results, uniform particle and droplet size reduction and deagglomeration.
In a particular embodiment, the emulsion A or B is introduced into the microfluidizer through an iterative process. In each cycle of said iterative process, the size of the micromicelles contained in the emulsion gradually decreases until reaching the nanometer range. The size of the resulting nanomicelles in the nanoemulsion A' or B' is in the range 100-200 nm after 1 cycle and may decrease up to 10-50 nm after 5 cycles. The size of the nanomicelles can be monitored by appropriate techniques known to a skilled person in the art (preferably, by Dynamic Light Scattering). In an embodiment, the emulsion A or B is introduced into the microfluidizer for at least 1 cycle, at least 2 cycles, at least 3 cycles, at least 4 cycles, at least 5 cycles. Thus, the incorporation of the step (c) into the method of the invention represents a significant advance compared to prior art as the control over the size of the micelles can lead to better control over the particle size of the conjugated porous polymer in a particulate form resulting from the subsequent step (step d).
Optionally, the emulsion A' obtained from step (c) is heated at a temperature between 50 and 100 °C prior to step d.

Step d)

In step d), the emulsion A' is subjected to thermal and/or pressure treatment while the emulsion B' is subjected to light irradiation. Once the emulsion A' or B' receives the appropriate stimulus (heating/pressure or light irradiation, respectively), a polymerization of the monomer(s) occurs within the nanomicelles.
In particular, the monomers in the emulsion A' may undergo metal-catalyzed cross-coupling under different conditions of temperature and/or pressure. As provided herein, a "cross-coupling" is the formation of a sigma bond between two atoms, for example, between two carbon atoms. Each atom coupled is necessarily a constituent of a moiety, and each moiety is necessarily a constituent of a molecule. The moieties coupled may be constituents of a single molecule or of two different molecules. Preferably, the moieties coupled are constituents of two different molecules (intermolecular process).
The catalytic polymerization may require heating and/or pressure to proceed at an appreciable rate. In an embodiment, the catalytic polymerization of the emulsion A' is carried out at a temperature comprised between 30-300 °C. In an embodiment, the temperature is comprised between 50-150 °C. In an embodiment, the pressure is comprised between 1-40 bar. In another embodiment, the pressure is comprised between 1-10 bar. In another embodiment, the catalytic polymerization of the emulsion A' is carried out at a temperature comprised between 30-300 °C and/or at a pressure comprised between 1-40 bar.
When the X groups in the first and second monomer are $NH_2$ and CHO groups and vice versa, successive condensation reactions with liberation of water take place and the polymers grow via successive formation of C=N imine bonds. The condensation between $NH_2$ and CHO groups usually take place in presence of catalytic amounts of an acid catalyst and via thermal and/or pressure activation. In an embodiment, the condensation between $NH_2$ and CHO groups takes place in presence of an acid catalyst.

Further, the polymerization via successive condensation of $NH_2$ and CHO groups may need heating and/or pressure to proceed at an appreciable rate. In an embodiment, the polymerization via successive condensation of $NH_2$ and CHO groups of the first and second monomer of the emulsion A' is carried out at a temperature comprised between 30-300 °C and/or at a pressure comprised between 1-40 bar. In a preferred embodiment, the temperature is comprised between 50-150 °C. In a preferred embodiment, the pressure is comprised between 1-10 bar.

In both cases, a conjugated porous polymer in a particulate form with particle size in the nanometer range and low particle size dispersity (≤0.4) is obtained.

The monomer in the emulsion B' undergoes a photopolymerization in presence of a photoinitiator or photosensitizer, and a surfactant under light irradiation. Regardless of the specific operating mechanism, a photopolymerization process is usually a free-radical polymerization where light is used to initiate polymerization. The light irradiation can be in a broad range of wavelengths, such as a 100-1100 nm range. Preferably, the emulsion B' undergoes a photopolymerization under UV/vis light irradiation. Several sources of UV/vis light are known for photopolymerization processes. Preferably, a tungsten lamp (320-1100 nm) is employed. The reaction time will depend on the time required to achieve full conversion of the monomer **I'-XI'**. Preferably, the reaction time is at least 1 min. More preferably, the reaction time is at least 1 hour. Even more preferably, the reaction time is in the range 1-48 hours.

Additional steps

After the step d), other additional steps may be optionally carried out in order to isolate and/or purify the obtained conjugated porous polymer. In order to afford the conjugated porous polymer as a colloidal suspension of particles, an optional dialysis step e) can be carried out to separate the suspended colloidal particles from dissolved ions or molecules of small dimensions by means of their unequal rates of diffusion through the pores of semipermeable membranes. Dialysis membranes bags can be used to perform the purification of the conjugated porous polymer in the mixture after the polymerization. The dialysis membranes bags containing said mixture are placed in a bath containing water and an organic solvent. Preferably, the dialysis is conducted from several hours up to several days under constant stirring, preferably for at least 1 hour and up to 10 days, more preferably for at least 12 hours and up to 5 days. Optionally, the membrane bag may be left in a bath containing only water during a time comprised between 1-48 hours. By this procedure, a homogenous dispersion of pure CPP in water is obtained and is suitable for further use.

Additionally, another isolation step f) can be performed to obtain the pure conjugated porous polymer. In an embodiment, the solvent (typically water) in which the particles are dispersed is removed under reduced pressure. In another embodiment, the dried polymer is washed with at least one solvent. In a preferred embodiment, the dried polymer is washed with one or more solvents selected from water, methanol, tetrahydrofuran, acetonitrile and diethyl ether.

*Porous conjugated polymer, hybrid material and uses thereof*

Another aspect of the present invention refers to a conjugated porous polymer in particulate form obtainable by any of the procedures indicated above, wherein particles of said polymer have a particle size dispersity ≤0.4 and an average particle size comprised between 1 and 150 nm as measured by Dynamic Light Scattering.

An advantage of the method of the present invention compared to those of the prior art mainly relies in the production of conjugated polymers with a uniform distribution of particle size in the nanometer range.

In the context of the present invention, the term "particle size dispersity" (PDI) refers to the width or spread of the particle size distribution and is expressed as dimensionless number obtained by the formula:

$$PDI = (\sigma/d)^2$$

wherein $\sigma$ is the standard deviation and *d* is the average particle diameter (d).

In the present invention, the average particle diameter d (or average particle size) has been determined by Dynamic Light Scattering (DLS) according to ISO 22412:2017, whereas the standard deviation $\sigma$ is a parameter that expresses how far (in terms of nanometers) the size of the nanoparticles deviates from the average size.

Since the process of the invention provides nanoparticles which are dispersed in a liquid medium, the average particle diameter as measured by DLS refers to the average hydrodynamic diameter, i.e. the average size of the nanoparticles that are surrounded by solvent molecules. Accordingly, the average diameter that is measured in DLS is a value that refers to how a particle diffuses within a fluid. The diameter that is obtained by this technique is the diameter of a sphere that has the same translational diffusion coefficient as the particle. In fact, ISO 22412:2017 specifies the application of dynamic light scattering (DLS) to the measurement of average hydrodynamic particle size and the measurement of the size distribution of mainly submicrometre-sized particles dispersed in liquids.

In the present invention, the particle size dispersity of the particles of conjugated porous polymer is ≤0.4 which

refers to a sample with a quite narrow particle size distribution. In an embodiment, the particle size dispersity of the conjugated porous polymer is ≤0.4. In another embodiment, the particle size dispersity of the conjugated porous polymer is comprised between 0.05 and 0.4. In another embodiment, the particle size dispersity of the conjugated porous polymer is comprised between 0.05 and 0.35. In another embodiment, the particle size dispersity of the conjugated porous polymer is comprised between 0.05 and 0.30. In another embodiment, the particle size dispersity of the conjugated porous polymer is about 0.05, about 0.1, about 0.2, about 0.3, about 0.4.

The monodisperse particle size in the nanometer range of the conjugated porous polymer obtainable by any of the procedures indicated above is an advantageous feature that also allows for improved processability, which is of industrial relevance.

In an embodiment, the average particle size (also referred to as average particle diameter) of the porous conjugated polymer as measured by DLS is comprised between 1 and 150 nm. In another embodiment, the average particle size of the porous conjugated polymer as measured by DLS is comprised between 10 and 100 nm. In yet another embodiment, the average particle size of the porous conjugated polymer as measured by DLS is comprised between 25 and 75 nm. In a preferred embodiment, the average particle size of the porous conjugated polymer as measured by DLS is about 55 nm.

As mentioned above, the average particle size (or average particle diameter) as measured by DLS refers to the average hydrodynamic particle size since nanoparticles are dispersed in a liquid medium. However, if nanoparticles are isolated from the liquid medium and dried, the average particle size can be determined by microscopy, in particular can be determined by Field Emission Scanning Electron Microscopy (FESEM). In this particular case, the average particle size (or diameter) obtained by FESEM is consistently smaller than that obtained by DLS as the latter includes solvated water or solvent molecules. In an embodiment, the average particle size of the porous conjugated polymer as measured by FESEM is comprised between 1 and 100 nm. In another embodiment, the average particle size of the porous conjugated polymer as measured by FESEM is comprised between 5 and 50 nm. In yet another embodiment, the average particle size of the porous conjugated polymer as measured by FESEM is comprised between 10 and 30 nm. In a preferred embodiment, the average particle size of the porous conjugated polymer as measured by FESEM is comprised between 20 and 25 nm.

As used throughout the text, the term "about" means a slight variation of the value specified, preferably within 10 percent of the value specified. Nevertheless, the term "about" can mean a higher tolerance of variation depending on for instance the experimental technique used. Said variations of a specified value are understood by the skilled person and are within the context of the present invention.

In an embodiment, the structure of the conjugated porous polymer obtainable by any of the procedures indicated above is selected from one of the following:

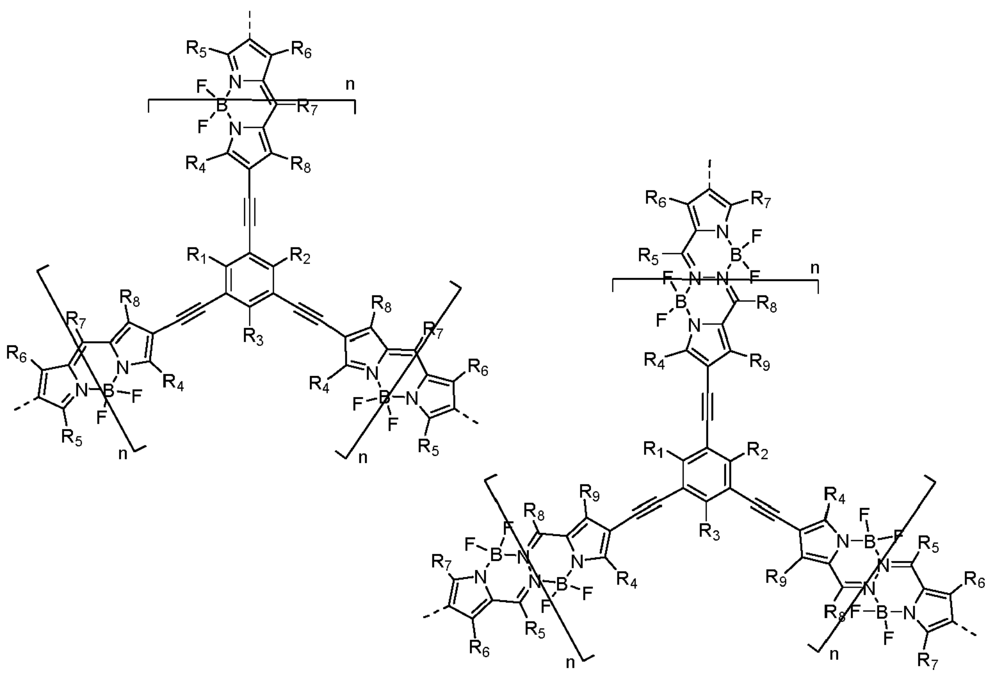

wherein the index n is a positive integer number that indicates the number of the repeating units in the porous conjugated polymer and may vary in a very narrow range for a given conjugated porous polymer. In one embodiment, *n* may be up

to 1000. In another embodiment, *n* may be up to 500. In yet another embodiment, n may be up to 250.

$R_1$-$R_9$ are independently selected from H and optionally substituted alkyl $C_{1-4}$. In another embodiment, n may be up to 100 and $R_1$-$R_9$ are independently selected from H and methyl.

In another embodiment, the structure of the conjugated porous polymer obtainable by any of the procedures indicated above is:

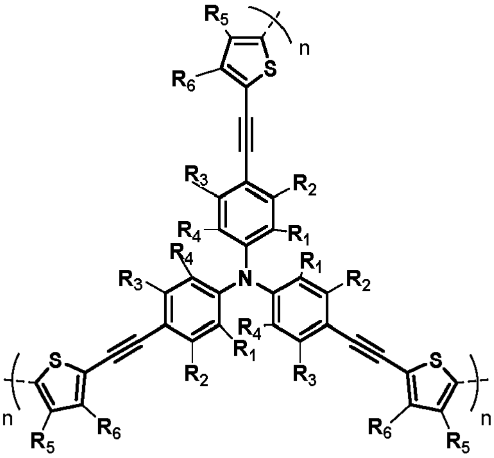

wherein *n* and $R_1$-$R_6$ are defined above. In an embodiment, *n* may be up to 1000 and $R_1$-$R_9$ are independently selected from H and optionally substituted alkyl $C_{1-4}$. In another embodiment, n may be up to 500. In yet another embodiment, *n* may be up to 250. In another embodiment, *n* may be up to 50 and $R_1$-$R_9$ are H.

Another aspect of the present invention relates to a hybrid material comprising a conjugated porous polymer as obtained by the method of the invention, and at least one inorganic semiconductor. The hybrid material can be prepared by methods known in the art. In an embodiment, the hybrid material is prepared by mixing a suspension containing the conjugated porous polymer in an organic solvent with a suspension of an inorganic semiconductor in the same solvent or in a different solvent. The organic solvent is preferably an alcohol, such as isopropanol, but may be a mixture of two organic solvents.

In a particular embodiment, the mixture is stirred between 1 and 300 min, with subsequent removal of the solvent. Once the solvent is removed, the obtained hybrid material can be subjected to a grinding process, for example by using a mortar.

The conjugated porous polymer is comprised in the hybrid material preferably in an amount between 0.01 and 99% by weight with respect to the total weight of the hybrid material. In another embodiment, the amount of conjugated porous polymer comprised in the hybrid material is between 0.1 and 90% by weight with respect to the total weight of the hybrid material. In a more preferred embodiment, the amount of conjugated porous polymer comprised in the hybrid material is about 10% by weight with respect to the total weight of the hybrid material.

Possible inorganic semiconductors include the following compounds: ITO (Indium Tin Oxide), $TiO_2$, TiSi, ZnO, $NaTaO_3$, $NaNbO_3$, $SnO_2$, $In_2O_3$, $Fe_2O_3$, $WO_3$, InP, $C_3N_4$, GaN, BN, ZnS, CdS, ZnSe, CdSe, CdTe, $BiWO_6$, $BiVO_4$.

In an embodiment, the inorganic semiconductor is $TiO_2$.

In another embodiment, the inorganic semiconductor is ITO.

In a preferred embodiment of the invention and prior to the preparation of the hybrid based on a conjugated porous polymer and an inorganic semiconductor, the inorganic semiconductor is subjected to a thermal treatment for the elimination of possible impurities and stabilization thereof, which varies between 100 °C and 1000 °C and which is carried out during a time between 2 h and 5 days.

The conjugated porous polymer and the organic-inorganic hybrid material described in the present invention find application as photocatalysts, preferably in artificial photosynthesis, water splitting into $H_2$ and $O_2$, nitrogen photoreduction to ammonia and $CO_2$ photoreduction.

The results of the evaluation of the hybrid materials of the invention as heterogeneous photocatalysts in hydrogen production processes from water show a substantial improvement over the activity of the sole inorganic material semiconductor, as well as a great photostability that allows its reuse in various cycles and long reaction times.

The conjugated porous polymer as well as the hybrid material of the invention are also useful for the production of thin films. In an embodiment, the conjugated porous polymer is deposited on an inorganic semiconductor and the resulting hybrid material can be used for the production of thin films of high quality and thickness comprised between 20 and 500 nm. Preferably, the semiconductor is ITO.

In a particular embodiment, thin films can be prepared by dispersing the conjugated porous polymer in water

followed by centrifugation and replacement of water by an organic solvent. Preferably, the organic solvent is an alcohol, more preferably is isopropanol. The dispersion is then sonicated during a time that may vary from 1 to 300 minutes. The deposition of the dispersion onto the inorganic semiconductor may be made by any method known in the art. For example, a spin-coating technique can be employed in order to get homogeneous thin films. The area of deposition may be delimited by means of a Kapton adhesive mask which defines the active surface of the substrate. The thin film obtained from the conjugated porous polymer synthesized by the process of the invention features higher quality, meaning that the film is more homogeneous and regular in terms of roughness compared to the film obtained by conventional mini-emulsion techniques. Moreover, the deposition is easier, faster and reproducible, since an improved nanostructure allows a more homogeneous particle distribution on the surface of the inorganic semiconductor. The quality of the film can be characterized by electron microscopy techniques (such as FESEM).

The following examples and figures are provided by way of illustration and are not they are intended to be limiting of the present invention.

**Examples**

All starting materials, reagents, catalysts and solvents were purchased from Fluorochem, Merck and TCI and used without prior purification.

Compound 4,4-difluoro-2,6-diiodo-1,3,5,7-tetramethyl-4-bora-3a,4a-diaza-s-indacene was prepared according to T. Yogo et al., J. Am. Chem. Soc. 2005, 127, 12162-12163.

Compound bis(difluoroboron)-2,7-diiodo-1,2-bis((1H-pyrrole-2-yl)methylene)hydrazine was prepared according to C. G. Lopez-Calixto et al., Appl. Catal. B. 2019, 258, 117933.

Compound tris(4-(thiophen-2-ylethynyl)phenyl)amine was prepared according to the procedure described in G. Albano et al., Chemistry Select 2018, 3, 1749.

CMPBDP obtained by mini-emulsion techniques was synthesized according to the procedure of Example 1 below for the synthesis of NanoCMPBDP, except that the sample after sonication was directly heated at 80 °C for 3 hours under reflux (step c in the microfluidizer was not performed).

CMPBDP obtained by bulk conventional techniques was synthesized according to M. Liras et al. Macromolecules 2016, 49, 1666-1673.

IEP-7 obtained by mini-emulsion techniques was synthesized according to the procedure of Example 1 below for the synthesis of NanoIEP-7, except that the sample after sonication was directly heated at 80 °C for 3 hours under reflux (step c in the microfluidizer was not performed).

IEP-7 obtained by bulk conventional techniques was synthesized according to C.G. López-Calixto, et al. Applied Catalysis B: Environmental 258 (2019) 117933.

FESEM images were taken with an FESEM JEOL JSM-7900F equipment provided with an energy-dispersive X-ray spectroscopy detector (X-EDS) Ultim Max 170 Oxford Instruments model. The images have been processed by means of Aztec de Oxford instruments software.

Dynamic Light Scattering (DLS) measurements were performed using a Zetasizer Malvern instruments, Multi Purpose Titrator, Zetasizer.

The ultrasound tip equipment used in the present invention was a Hielscher ultrasonic processor UP400S (400 W, 24 kHz) which allows for sonication of large samples in the laboratory and for homogenization and deagglomeration of samples.

A LM20 Microfluidizer High Shear Homogeniser was used as microfluidizer.

**Example 1. Nanoemulsion plus thermal polymerization**

Two conjugated porous polymers, IEP-7 and CMPBDP (note that IEP means IMDEA Energy Polymer), were synthesized according to the method of the invention. In the two examples, a Sonogashira cross-coupling reaction was used to obtain the corresponding CPP starting from an alkyne derivative and a halogenated derivative. However, the method of the invention could also be carried out via other metal-catalyzed cross-croupling reactions such as Heck, Stille and Suzuki reactions and it would be immediately known to a skilled person how to adapt the reaction conditions accordingly.

Synthesis of NanoCMPBDP. 209 mg (1.39 mmol) of 1,3,5-triethynylbenzene, 56 mg (0.05 mmol) of tetrakis(triphenylphosphine) palladium (0), 18 mg (0.1 mmol) of copper(I) iodide and 623 mg (1.21 mmol) of 4,4-difluoro-2,6-diiodo-1,3,5,7-tetramethyl-4-bora-3a, 4a-diaza-s-indacene were dissolved in 11 mL of a 1:1 mixture (by volume) of toluene and triethylamine. This solution was slowly added to a beaker containing 80 mL of an aqueous solution of hexadecyltrimethylammonium bromide (1 wt%) and the obtained mixture was subjected to an ultrasound probe (Cycle 1; Amplitude 50-60) until the mixture was as homogeneous as possible.

Then, the solution was introduced into a microfluidizer 5 times (until the particle size does not decrease further

and remains stable with time) and in each cycle the size of the nanomicelles (with size below 100 nm) was monitored by Dinamic Light Scattering (DLS). Afterwards, the mixture was heated at 80 °C for 3 hours under reflux. Then, the nanoemulsion was placed into an autoclave which was heated at 150 °C to carry out the polymerization. After 10 hours treatment at 150 °C, the desired polymer was obtained with a quantitative yield. Once the reaction went to completion, 10 mg of NaCN was added to the reaction crude which after 10 h was then dialyzed using dialysis tube membranes (Regenerated Cellulose Dyalisis Tubing, 12-14 kDa, Orange Scientific). The dialysis tube membranes were placed in a bath with a 1:1 mixture of distilled water and THF for several days under constant stirring. Finally, the bags were left in a water bath during an additional day, finally obtaining homogenous dispersions of pure CPPs.

Synthesis of NanoIEP-7. 109 mg (0.72 mmol) of 1,3,5-triethynylbenzene, 33 mg (0.03 mmol) of tetrakis(triphenylphosphine) palladium(0), 11 mg (0.06 mmol) of copper (I) iodide and 643 mg (1.09 mmol) of bis(difluoroboron)-2,7-diiodo-1,2-bis((1H-pyrrole-2-yl) methylene)hydrazine were dissolved in 16 mL of a 1:1 v/v mixture of toluene and triethylamine (8 mL of each). This solution was slowly added to a beaker containing 80 mL of hexadecyltrimethylammonium bromide (1 wt. %) and the obtained mixture was subjected to an ultrasound probe (Cycle 1; Amplitude 50-60) until the mixture was as homogeneous as possible.

Then, the solution was introduced into a microfluidizer up to 5 times and in each cycle the size of the nanomicelles was monitored by Dinamic Light Scattering (DLS). Afterwards, the mixture was heated at 80 °C for 3 hours under reflux. Then, the nanoemulsion was placed into an autoclave which was heated at 150 °C to carry out the polymerization. After 16 hours treatment at 150 °C, the desired polymer was obtained with a quantitative yield. Once the reaction went to completion, 10 mg of NaCN was added to the reaction crude which after 10 h of reaction was then dialyzed using dialysis tube membranes (Regenerated Cellulose Dyalisis Tubing, 12-14 kDa, Orange Scientific). The dialysis bag membranes were placed in a bath with a 1:1 mixture of distilled water and THF for several days under constant stirring. Finally, the bags were left in a water bath during an additional day, finally obtaining homogenous dispersions of pure CPPs.

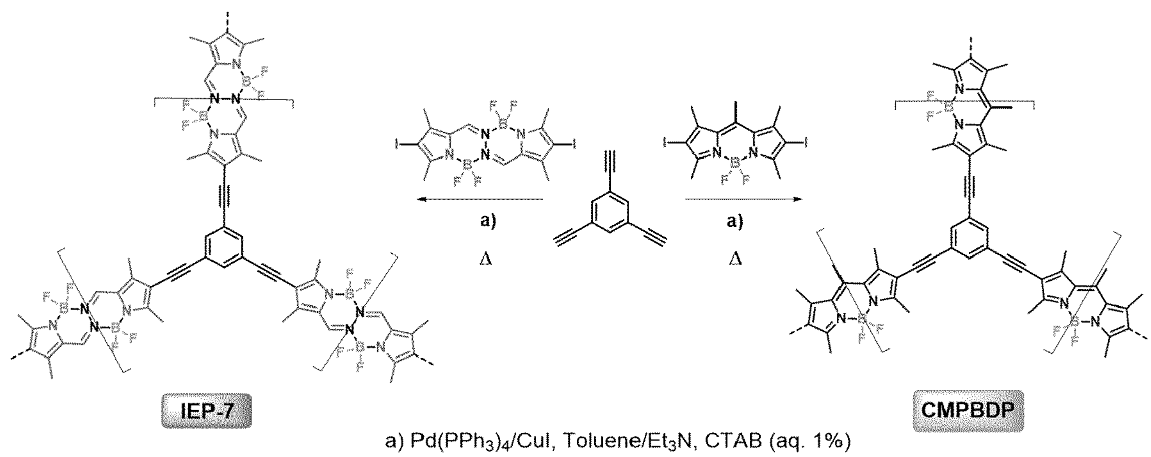

a) $Pd(PPh_3)_4/CuI$, Toluene/$Et_3N$, CTAB (aq. 1%)

## Example 2. Nanoemulsion plus photopolymerization

The polymer IEP-28 is herein presented as an example of free-radical photopolymerization. Synthesis of NanoIEP-28. In a flask, 400 mg (0.71 mmol) of tris(4-(thiophen-2-ylethynyl)phenyl)amine, 30 mg (0.07 mmol) of diphenyliodonium hexafluorophosphate, were dissolved in 2.5 mL of DCM. The resulting solution was slowly added to a beaker containing 25 mL of an aqueous solution of hexadecyltrimethylammonium bromide (1wt. %) and the resulting mixture was subjected to an ultrasound probe (Cycle 1; Amplitude 50-60) until the mixture was as homogeneous as possible. Then, the solution was introduced into a microfluidizer 5 times and in each cycle the size of the nanomicelles were monitored by Dinamic Light Scattering (DLS). After 5 hours of UV illumination with a tungsten lamp, the desired conjugated porous polymer IEP-28 (shown in the scheme below) was obtained in quantitative yield. The reaction crude was then dialyzed. The crude product was placed into dialysis tube membranes (Regenerated Cellulose Dyalisis Tubing, 12-14 kDa, Orange Scientific) which were placed in a bath containing a 1:1 mixture of distilled $H_2O$ and THF for several days under constant stirring. Finally, the bags were left in a water bath an additional day to afford well-dispersed pure CPPs.

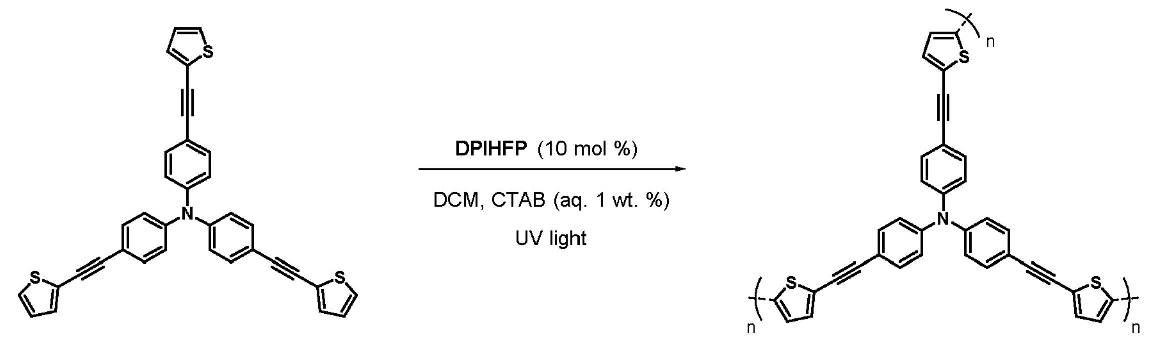


IEP-28

### Example 3. Morphological characterization of the nanostructured CPPs

The hydrodynamic diameter of the nanostructured CPP particles and size distribution were determined by Dynamic Light Scattering (DLS) according to ISO 22412:2017.

For comparatives purposes, particles were also obtained by the same method of example 1 but excluding the step of introducing the solution into a microfluidizer. It will be referred from now onwards to miniemulsion technique.

When CMPBDP was synthetized following the method of the invention (namely by a "nanoemulsion" technique), the particles displayed a smaller size compared to those obtained by miniemulsion technique and the highest monodispersity (53 nm at 100% population size, see table 1 for more details).

As regards IEP-7 dispersions, when applying the method of the invention (nanoemulsion technique), a clear reduction in particle size (measured as hydrodynamic diameter) and the lowest dispersity (57 nm at 100% population size) were observed compared to the corresponding particles obtained by miniemulsion technique. See table 1 below for more detail.

Table 1. Particle size distribution for CMPBDP and IEP-7 polymeric dispersions.

| Polymer | Preparation method | DLS | |
|---|---|---|---|
| | | Hydrodynamic diameter (nm) | Number (%) |
| CMPBDP | Miniemulsion | 185 ±45 | 82 |
| | **Nanoemulsion (This invention)** | **53±18** | **100** |
| IEP-7 | Miniemulsion | 459±80 | 81 |
| | **Nanoemulsion (This invention)** | **57±7** | **100** |

Morphological characterization of the CMPBDP polymer synthetized according to the invention was carried out using a FESEM technique (Figure 3A). In figure 3A, well-dispersed and homogeneous spherical nanoparticles with average diameter of ~25nm are observed. A detailed size distribution histogram is displayed in Figure 3B.

For comparative purposes, Figure 3C shows a FESEM image of CMPBDP synthetized through miniemulsion technique. Spherical particle aggregates with a broad polydisperse particle size are mainly visible.

### Example 4. Preparation of thin films based on nanostructured CPPs.

Colloidal polymeric nanoparticles are suitable starting materials for the preparation of thin films which find application in the optoelectronic field.

Thin film preparation. A 1 mL water dispersion of the NanoCMPBDP and Nano IEP-7 (5.4 g/L) was centrifuged and the water supernatant was replaced by isopropanol. The dispersion was then sonicated for 30 minutes. Subsequently, 30 μL of each of the polymeric dispersion were deposited on the conductive part of the ITOs, in a 1×1 $cm^2$ area delimited by means of a Kapton adhesive mask to define and isolate the active surface of the substrate. A spin-coating technique was employed in order to get homogeneous thin films. The conditions used for the spin-coating involve two steps: step 1 for the drop pipetting (spin speed 1000 rpm; spin acceleration 500 rpm/s; spin time: 10s) and step 2 for drop distribution (spin speed 3000 rpm; spin acceleration 1000 rpm/s; spin time: 30s).

For comparative purposes, thin films were also prepared by the same method as described in the paragraph

above but starting from the particles obtained according to miniemulsion technique.

Figure 5 shows that the highest quality thin film was achieved by means of nanoemulsion techniques when compared to miniemulsion technique. Moreover, the deposition is easier, faster and reproducible, since an improved nanostructure allows a more homogeneous particle distribution on the surface of the ITO.

Figure 6 shows a cross-section of these thin films measured by means of Field emission scanning electron microscopy (FESEM). In the case of a nanoemulsion polymer (Figure 6A), high quality and homogeneous film of less than 1$\mu$m thickness was obtained in comparison to films obtained by miniemulsion technique (Figure 6B), which show lack of homogeneity and exhibit a wide range of thickness going from few nanometers to several micrometers.

Additionally, a continuous and homogeneous film was found at the top layer of using the polymer obtained according to the present invention (Figure 7A and 7B). However, using miniemulsion technique, a polydisperse and cracked film was obtained (Figure 7C and 7D).

**Example 5. Electrochemical performance**

Once the thin films were prepared, electrochemical measurements were carried out using a potentiostat-galvanostat recording the electrochemical variations over time, controlling the potential difference between the working electrode (WE) and reference electrode (RE), and the current between the WE and the counter electrode (CE). In addition, the NOVA software was used for processing the recorded data.

In order to compare the robustness of the polymer synthetized according to the present invention with that of the polymer synthesized using miniemulsion technique, a study of the corresponding currents over a long period of time was performed (chronoamperometry measurements). The measurement of the currents was carried out applying light or under darkness conditions at two different constant potentials (-0.6V and 0.2V, see Figure 8 and Figure 9 for more detail).

At both potentials (-0.6V and 0.2V), the nanoemulsion polymer displayed a higher photocurrent, thus the photoelectrochemical properties of the corresponding polymer were clearly improved according to the method of the invention. This fact was significantly appreciated at 0.2V, where photocurrents were up to two times higher for the polymer synthetized using this invention (Figure 9).

On the other hand, when a potential of -0.6V was applied (Figure 8), the photocurrent associated to the polymer obtained by the miniemulsion technique decreased over time and was not stable compared to that of the conjugated porous polymer obtained by the method of the present invention.

This result can be correlated to the better quality of the polymer obtained using the nanoemulsion technique. The nanometric and homogeneous distribution of particle size of the CMPBDP using this invention allowed the formation of uniform and thin layers when compared to the layers of the CMPBDP obtained using the miniemulsion technique (Figure 7). Thus, the adhesion of the polymer particles of the invention was improved and, consequently, the measurement of the current could be reliably made over a longer period.

**Example 6. Photocatalytic performance of hybrid materials based on nanostructured CPPs**

Hybrid materials were synthesized from a CPP and an inorganic semiconductor (metal oxides, chalcogenides, sulfurs, etc.) to test their activity in photocatalysis.

The samples CMPBDP_bulk@T10 (hybrid material comprising CMPBDP obtained by bulk conventional techniques) and IEP-7_bulk@T10 (hybrid material comprising IEP-7 obtained by bulk conventional techniques) were prepared according to procedures described by our group (Collado, L.; Naranjo, T.; Gomez-Mendoza, M.; Lopez-Calixto, C. G.; Oropeza, F. E.; Liras, M.; Marugán, J.; De, V. A.; Shea, P. O. Conjugated Porous Polymers Based on BODIPY and BOPHY Dyes in Hybrid Heterojunctions for Artificial Photosynthesis. Adv. Funct. Mater. 2021, 2105384).

Hybrid material preparation. Hybrid materials with $TiO_2$ and 10% of the polymer were prepared as follows: 90 mg of $TiO_2$ was dispersed in 130 mL of a mixture of water and MeOH (10% vol) Then a volume of the corresponding dispersion of conjugated porous polymer (*ca.* 2-6 g $L^{-1}$) in water (corresponding to 10 mg of solid nanoparticles of CPPs) was added, this mixture was stirred for 5 min and then sonicated for 10 minutes to achieve a homogeneous dispersion. The dispersion was then introduced into a reactor.

The same procedure was applied to the polymers obtained by miniemulsion technique to form hybrid materials for comparative purposes (CMPBDP_mini@T10 and IEP-7_mini@T10).

Photocatalytic tests on hydrogen production. The reactor was connected to a UV lamp which was connected to a GC. Air was eliminated by means of a constant flow of argon, then the reactor was irradiated and the hydrogen formed by water photoreduction was detected and quantified. The photocatalytic results related to NanoCMPBDP and NanoIEP-7 based hybrids were compared to those obtained by conventional techniques which includes bulk and miniemulsion. On one hand, it was observed that the results related to CMPBDP obtained by mini-emulsion were very similar to those previously studied by bulk polymer (CMPBDP@T-10). Note that this hybrid was prepared mixing both in water:acetonitrile, removing the solvent and then mortaring the resulting powder.

However, the hybrid prepared by nanoemulsion, NanoCMPBDP, afforded approximately a twofold hydrogen production compared those obtained by conventional techniques (Figure 10).

On the other hand, also the hybrid material prepared from nanostructured polymeric IEP-7 material gave rise to a much improved photocatalytic activity, up to 2 times higher compared to the hybrid prepared from the miniemulsion technique and up to 3.6 times when compare with conventional bulk synthesis (Figure 11).

## Claims

1. Method for preparing a porous conjugated polymer in a particulate form, wherein particles have a particle size dispersity ≤0.4 and an average particle size comprised between 1 and 150 nm as measured by Dynamic Light Scattering, said method comprising:

    a) preparing a mixture A comprising:

    - a catalyst;
    - a surfactant;
    - a first monomer of formula **I-XXIII;**

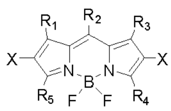
I
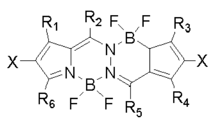
II
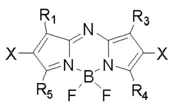
III
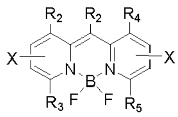
IV
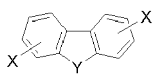
V
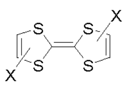
VI
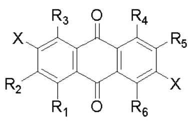
VII
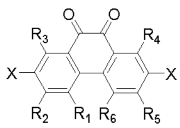
VIII
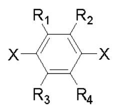
IX
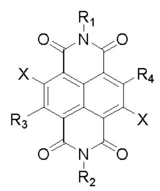
X
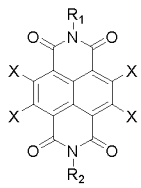
XI
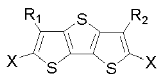
XII
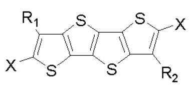
XIII
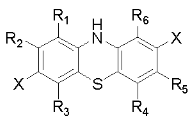
XIV
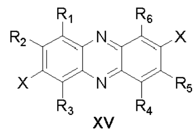
XV
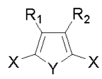
XVI
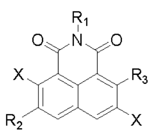
XVII
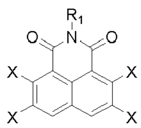
XVIII
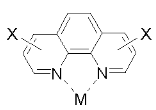
XIX
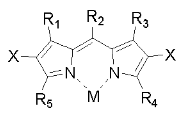
XX
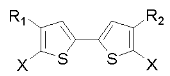
XXI
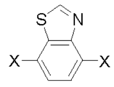
XXII
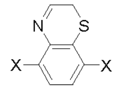
XXIII

and

- a second monomer of formula **I'-XI'**:

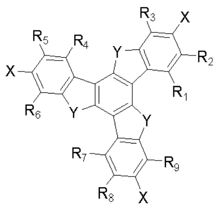
I'
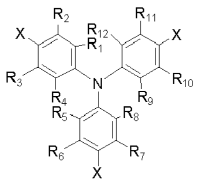
II'
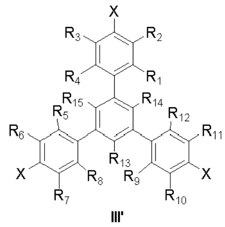
III'
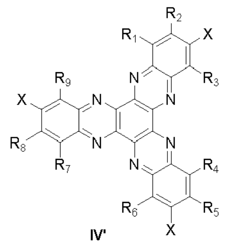
IV'
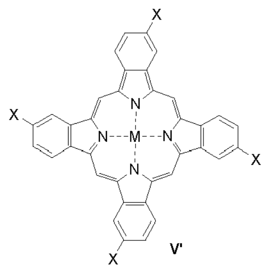
V'

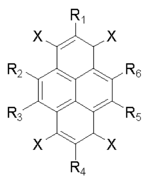
VI'
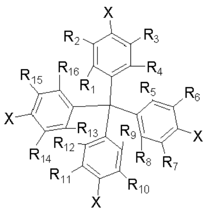
VII'
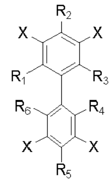
VIII'
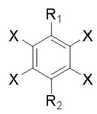
IX'
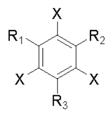
X'
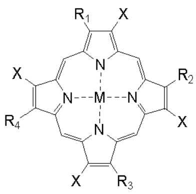
XI'

wherein the groups $R_1$ to $R_{16}$ are independently selected from H, $-OR_{17}$, $-NO_2$, $-NR_{18}R_{19}$, $-SR_{20}$, $-COOR_{21}$, $-SO_3$, $-PO_3$, $-SCOR_{22}$, and optionally substituted $C_{1-4}$ alkyl, optionally substituted $C_{6-10}$ aryl, vinyl, ethynyl, $-C{\equiv}C-C_6H_4X'$ or $-C{=}C-C_6H_4X'$ wherein X' is halogen and $R_{17}$-$R_{22}$ are selected from H, optionally substituted $C_{1-4}$ alkyl and optionally substituted $C_{6-10}$ aryl;
Y is $CY'_2$, O, NY' or S, wherein Y' is independently selected from H, optionally substituted $C_{1-4}$ alkyl, and optionally substituted $C_{6-10}$ aryl;
M is a divalent or a tetravalent metal;
X is independently selected from halogen, $-C{\equiv}CH$, $-NH_2$, -CHO, $-C{\equiv}C-C_6H_4X'$ or $-C{=}C-C_6H_4X'$, wherein X' is halogen;
and wherein,

- if X in the first monomer is a halogen, $-C{\equiv}C-C_6H_4X'$ or $-C{=}C-C_6H_4X'$ wherein X' is halogen, X in the second monomer is:

  i) -C=CH, or
  ii) $-B(OR_a)(OR_b)$, where $R_a$ and $R_b$ are independently selected from H and $C_{1-4}$ alkyl, or $R_a$ and $R_b$ can form a $C_{3-7}$ carbocycle optionally substituted with $C_{1-4}$ alkyl groups; or
  iii) $-Sn(R_c)_3$ where $R_c$ is selected from H, optionally substituted alkyl $C_{1-4}$, optionally substituted $C_{6-10}$ aryl, vinyl or ethynyl;

- if X in the second monomer is a halogen, $-C{\equiv}C-C_6H_4X'$ or $-C{=}C-C_6H_4X'$ wherein X' is halogen, X in the first monomer is:

  i) -C=CH, or
  ii) $-B(OR_a)(OR_b)$, where $R_a$ and $R_b$ are independently selected from H and alkyl $C_{1-4}$, or $R_a$ and $R_b$ can form a $C_{3-7}$ carbocycle optionally substituted with $C_{1-4}$ alkyl groups; or
  iii) $-Sn(R_c)_3$ where the groups $R_c$ are independently selected from selected from H, optionally substituted alkyl $C_{1-4}$, optionally substituted aryl $C_{6-10}$, vinyl or ethynyl;

- if X in the first monomer is $-NH_2$, X in the second monomer is -CHO;
- if X in the first monomer is -CHO, X in the second monomer is $-NH_2$;

or preparing a mixture B comprising:

- a photosensitizer and/or a photoinitiator
- a surfactant; and
- a monomer of formula **I'-XI'**, wherein

  the groups $R_1$ to $R_{16}$, Y and M are defined as above, and
  X is independently selected from optionally substituted 2-thiophenyl, 2-pyrrolyl, 2-furanyl, N-carbazolyl,

-C≡CZ and -CH=CHZ wherein Z is independently selected from optionally substituted 2-thiophenyl, 2-pyrrolyl, 2-furanyl and N-carbazolyl;

b) stirring the mixture A or B from step a) under ultrasound tip conditions to obtain a homogenous emulsion A or B, respectively, said emulsion containing micromicelles;
c) introducing the emulsion A or B resulting from step b) into a microfluidizer to obtain an emulsion A' or B', respectively, said emulsion containing nanomicelles; and
d) subjecting the emulsion A' to thermal and/or pressure treatment or subjecting the emulsion B' to light irradiation, to obtain a conjugated porous polymer in a particulate form.

**2.** The method according to claim 1 wherein additional steps to purify and/or isolate the porous conjugated polymer in a particulate form are carried out after step d).

**3.** The method according to claims 1 and 2 wherein the mixture A is prepared in step a) and step d) is carried out at a temperature comprised between 30-300 °C and/or at a pressure comprised between 1-40 bar.

**4.** The method according to claims 1 and 2 wherein the mixture B is prepared in step a) and step d) is conducted in presence of a photosensitizer and under light irradiation with a wavelength between 100-1100 nm.

**5.** The method according to claims 1 to 3 wherein the group X in the first monomer or in the second monomer is halogen.

**6.** The method according to claim 5 wherein the metal catalyst is a palladium catalyst, preferably is tetrakis(triphenylphosphine) palladium(0).

**7.** The method according to any of the preceding claims wherein the surfactant is a quaternary ammonium compound selected from the group consisting of benzalkonium halide, lauralkonium halide, cetrimide, hexadecyltrimethylammonium halide, tetradecyltrimethylammonium halide, dodecyltrimethylammonium halide, cetrimonium halide, benzethonium halide, behenalkonium halide, cetalkonium halide, cetethyldimonium halide, cetylpyridinium halide, benzododecinium halide, chlorallyl methenamine halide, myristalkonium halide, stearalkonium halide or a mixture of two or more thereof, halide being preferably chloride or bromide.

**8.** A conjugated porous polymer in a particulate form obtainable according to the method as defined in any one of claims 1 to 7, wherein particles have a particle size dispersity ≤0.4 and an average particle size comprised between 1 and 150 nm as measured by Dynamic Light Scattering.

**9.** The conjugated porous polymer according to claims 8 or 9 **characterized in that** the structure is selected from one of the following:

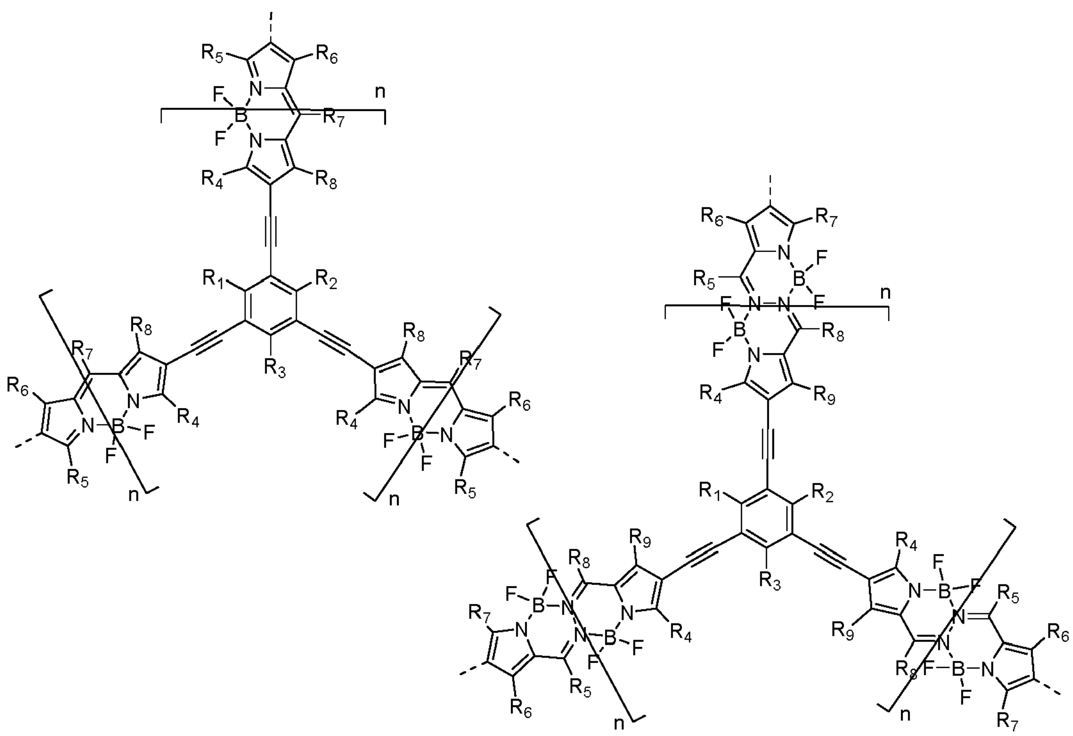

wherein n is a positive integer up to 1000 and groups $R_1$-$R_9$ are as defined in claim 1.

10. The conjugated porous polymer according to claims 8 or 9 **characterized in that** the structure is

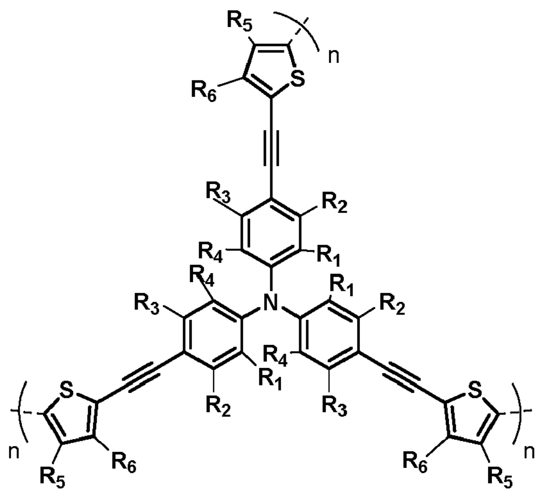

wherein n is a positive integer up to 1000 and groups $R_1$-$R_6$ are as defined in claim 1.

11. Hybrid material comprising a porous conjugated polymer as defined in any of claims 8 to 10 and at least one inorganic semiconductor.

12. Hybrid material according to claim 11 wherein the conjugated porous polymer is in a proportion between 0.01-99% by weight with respect to the total weight of the hybrid material, preferably between 0.1-90% by weight, more preferably the porous conjugated polymer is present in about 10% by weight with respect to the total weight of the hybrid material.

13. Hybrid material according to claims 11 and 12 **characterized in that** the inorganic semiconductor is selected from $TiO_2$, TiSi, ZnO, $NaTaO_3$, $NaNbO_3$, $SnO_2$, $In_2O_3$, $Fe_2O_3$, $WO_3$, InP, $C_3N_4$, GaN, BN, ZnS, CdS, ZnSe, CdSe, CdTe,

$BiWO_6$, $BiVO_4$.

**14.** Use of the conjugated porous polymer as defined in claims 8 to 10 or of the hybrid material as defined in any of claims 11 to 13 as photocatalysts, preferably in a process selected from photoproduction of hydrogen from water, photoreduction of $CO_2$ or photoproduction of ammonia from $N_2$.

**15.** Use of the conjugated porous polymer as defined in claims 8 to 11 or of the hybrid material as defined in any of claims 11 to 13 for the production of thin films.

# FIGURES

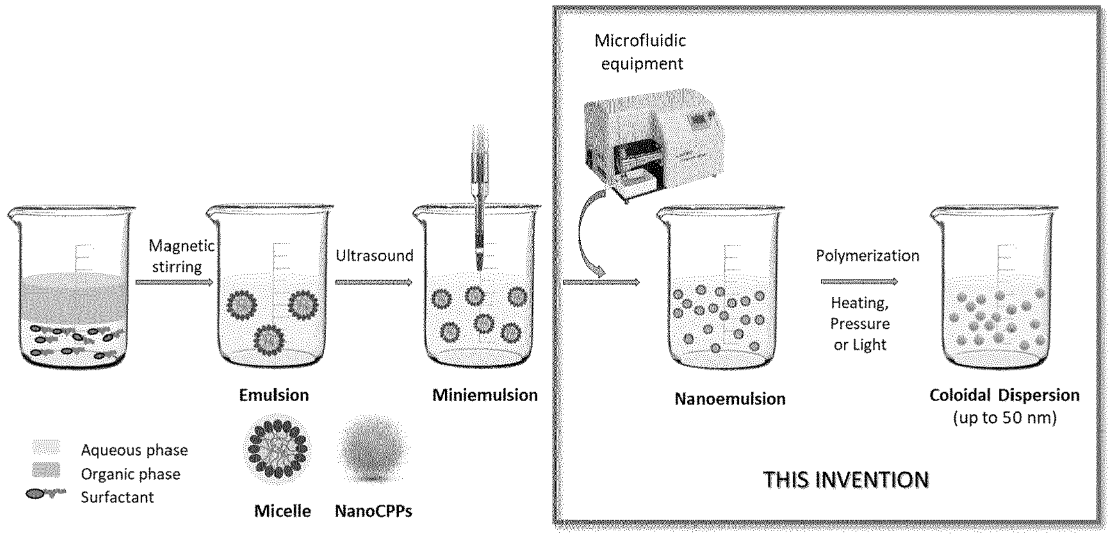


Figure 1

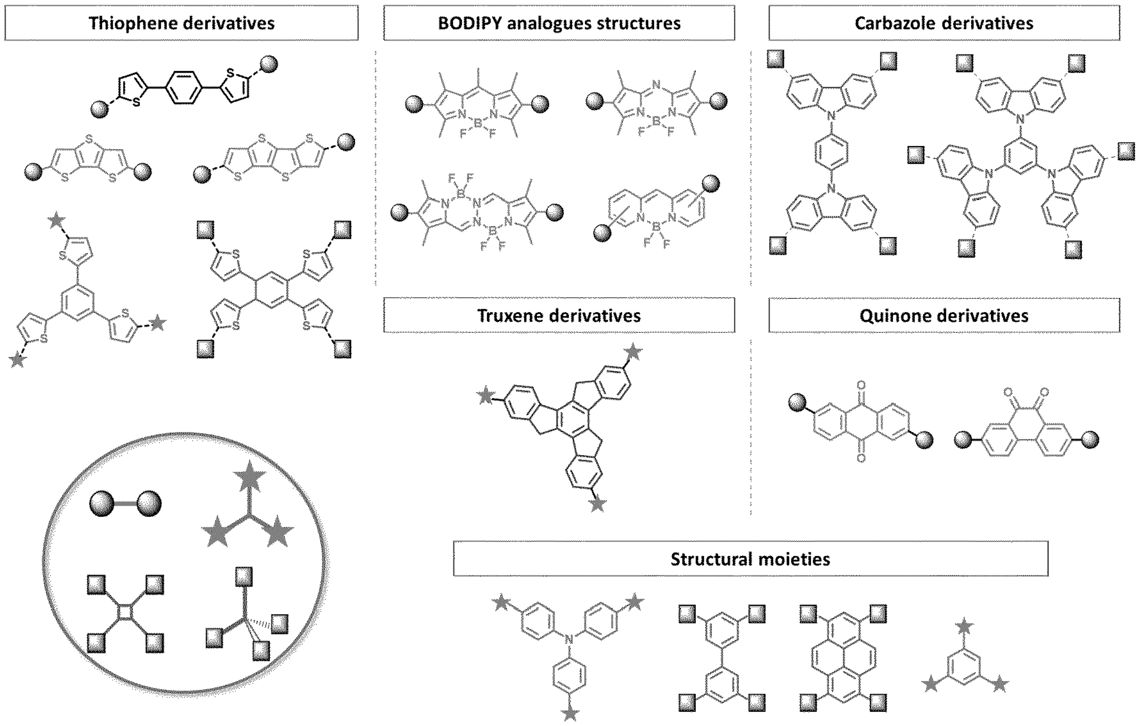
Thiophene derivatives
BODIPY analogues structures
Carbazole derivatives
Truxene derivatives
Quinone derivatives
Structural moieties

Figure 2

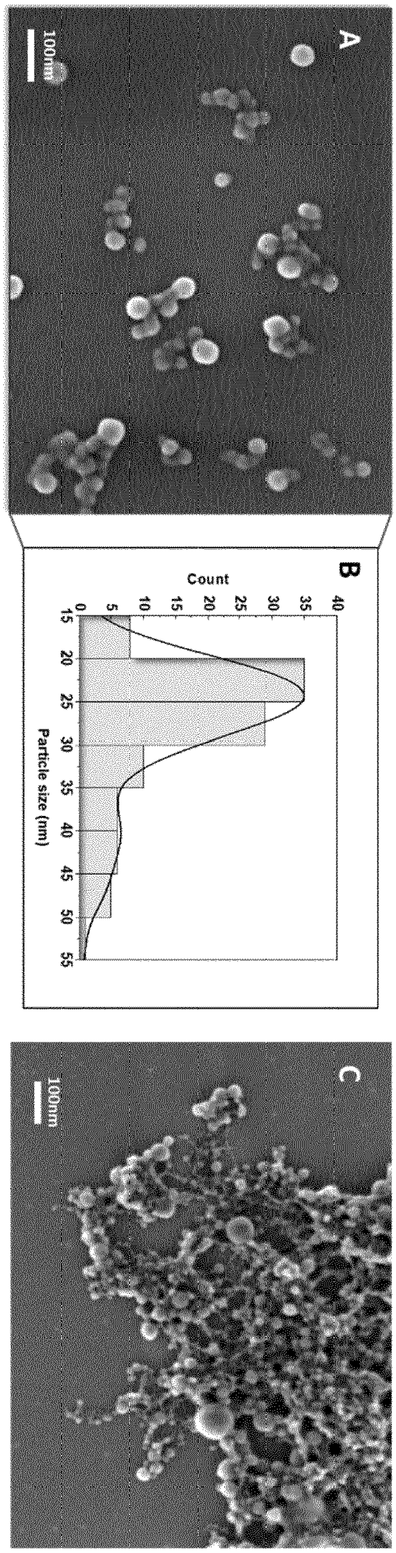
A
100nm
B
Count
0
5
10
15
20
25
30
35
40
15
20
25
30
35
40
45
50
55
Particle size (nm)
C
100nm

Figure 3

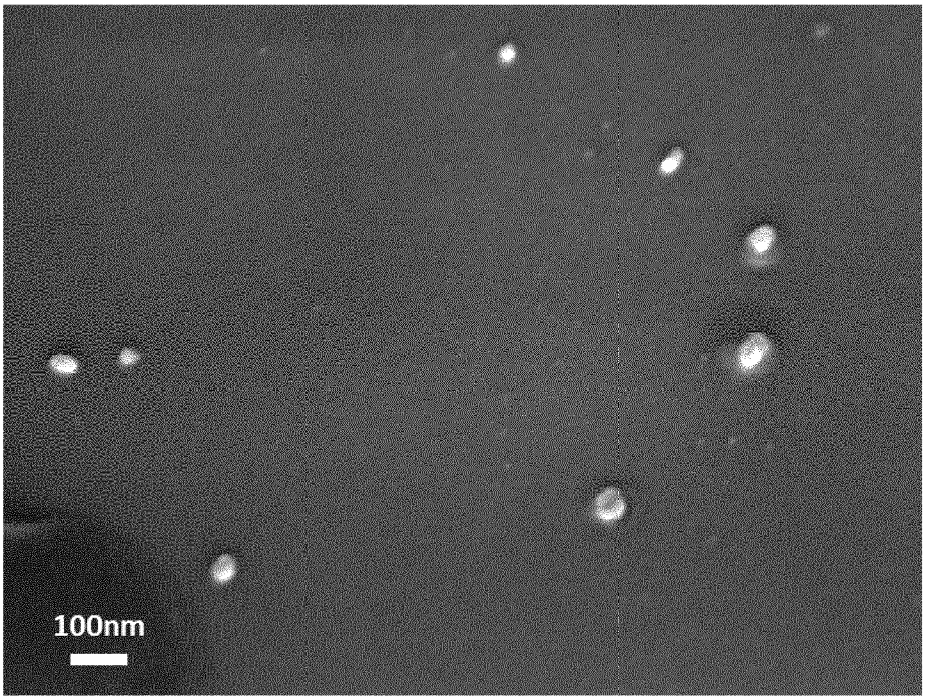


Figure 4

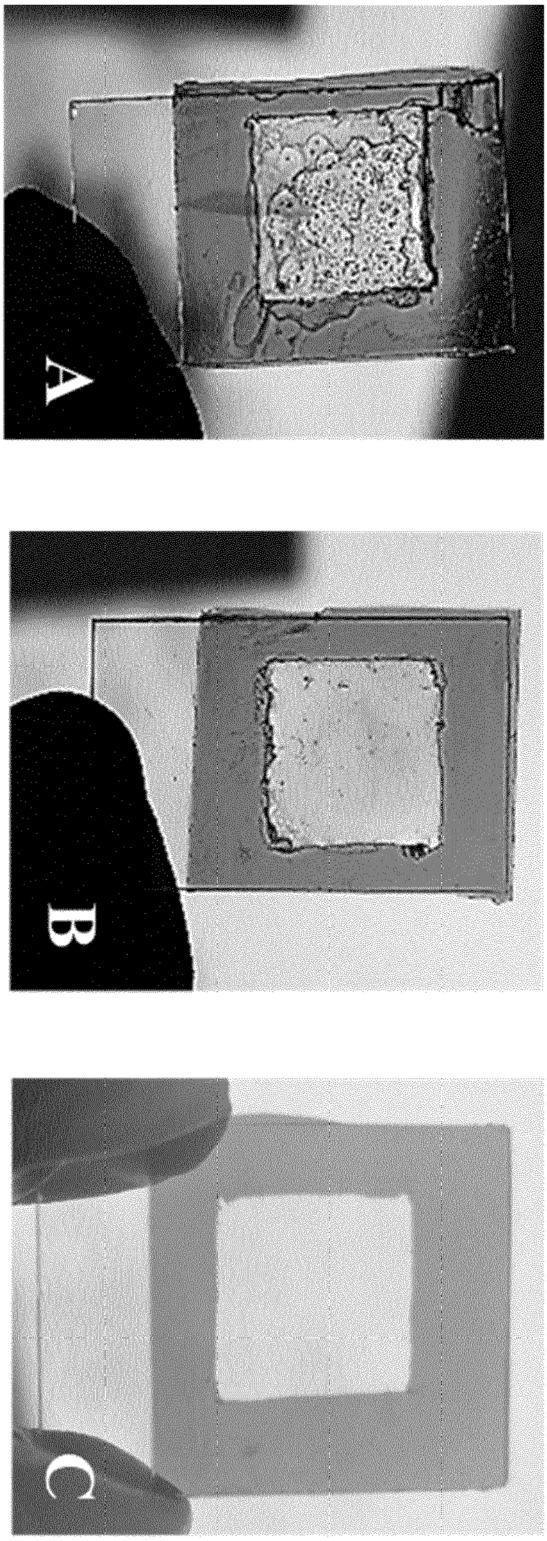


Figure 5

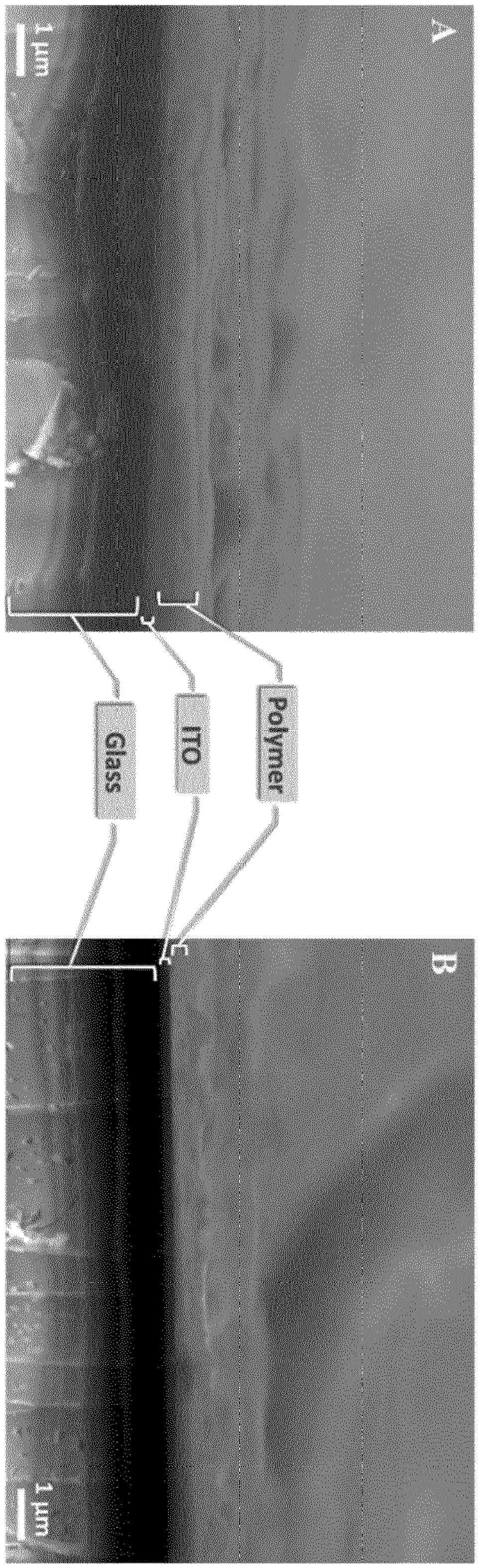


Figure 6

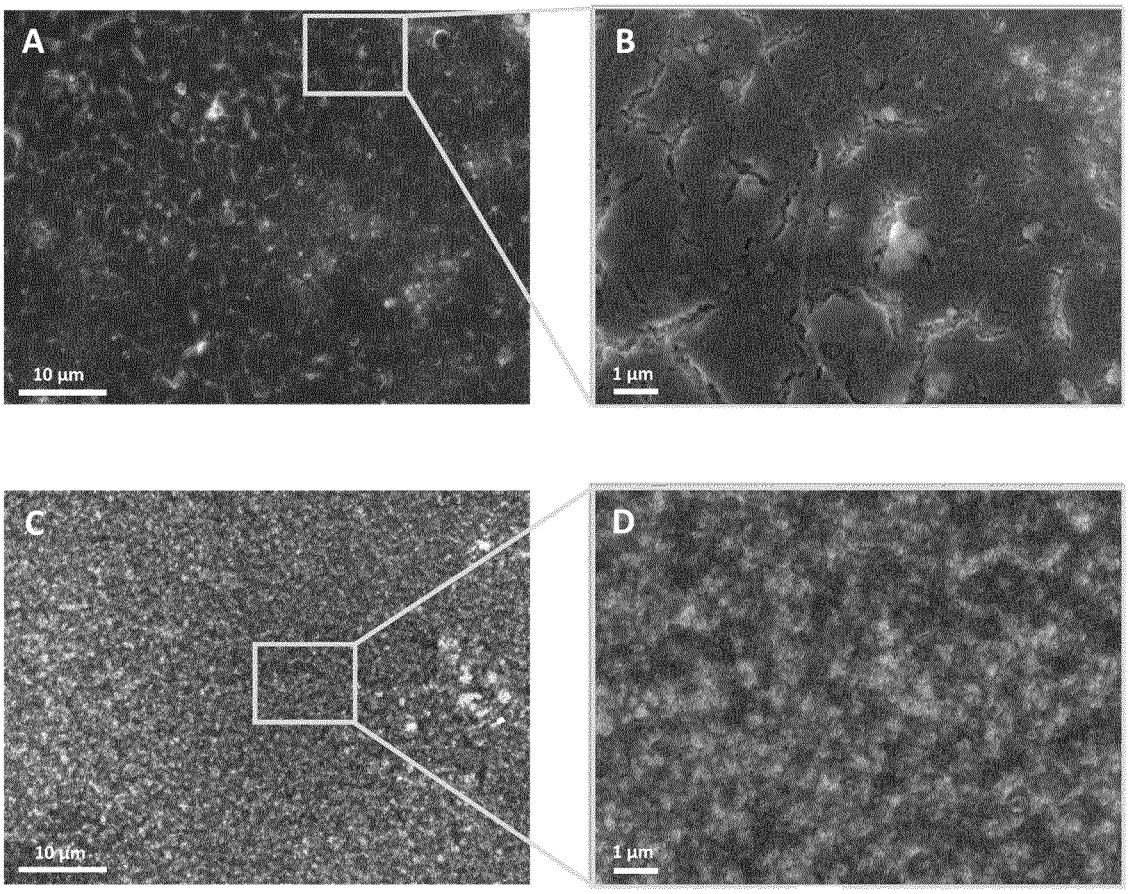


Figure 7

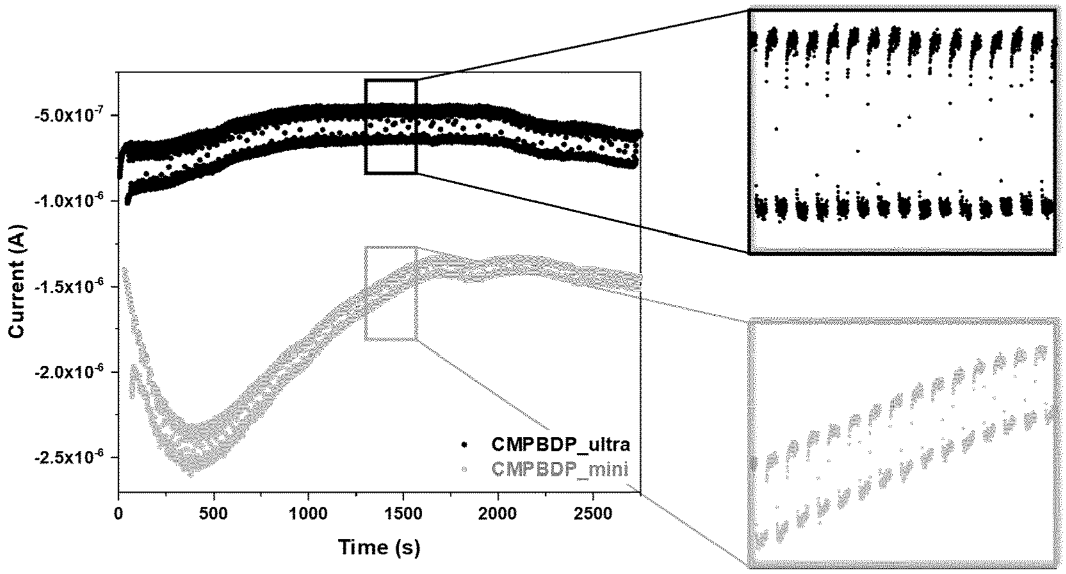

Current (A)
-5.0x10^-7
-1.0x10^-6
-1.5x10^-6
-2.0x10^-6
-2.5x10^-6
0
500
1000
1500
2000
2500
Time (s)
CMPBDP_ultra
CMPBDP_mini


Figure 8

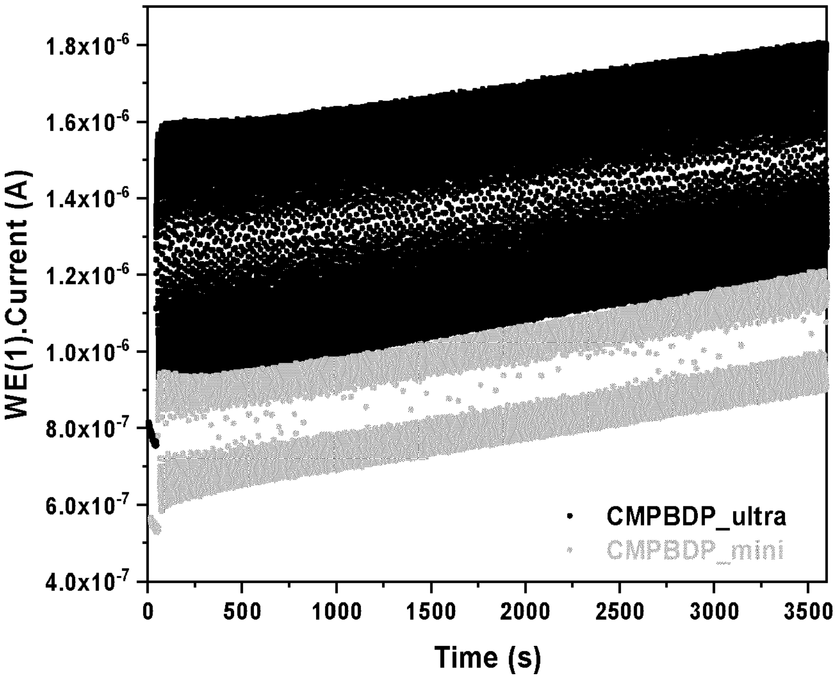
1.8x10^-6
1.6x10^-6
1.4x10^-6
1.2x10^-6
1.0x10^-6
8.0x10^-7
6.0x10^-7
4.0x10^-7
WE(1).Current (A)
0
500
1000
1500
2000
2500
3000
3500
Time (s)
CMPBDP_ultra
CMPBDP_mini

Figure 9

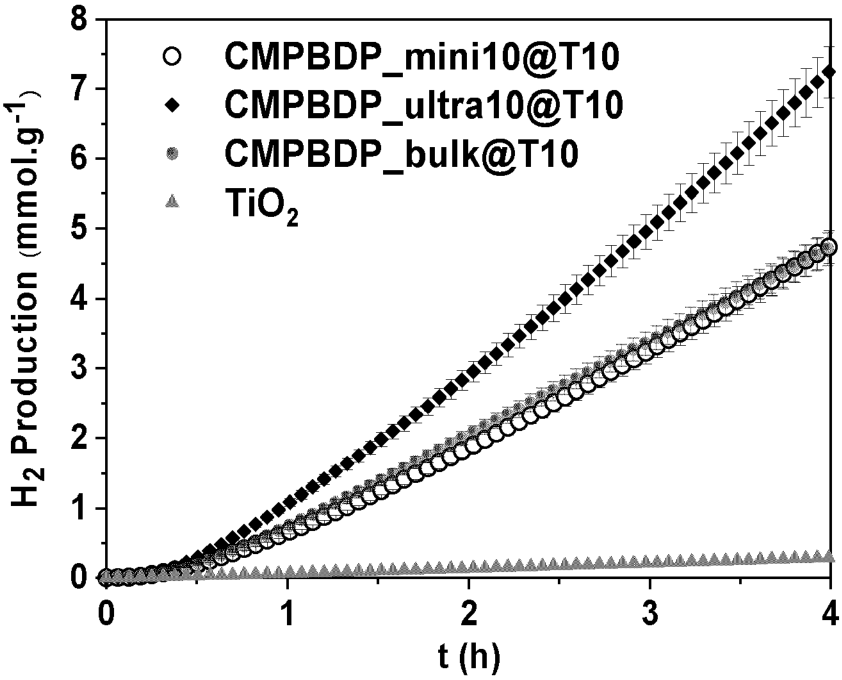
CMPBDP_mini10@T10
CMPBDP_ultra10@T10
CMPBDP_bulk@T10
TiO2
H2 Production (mmol.g-1)
t (h)
0
1
2
3
4
5
6
7
8

Figure 10

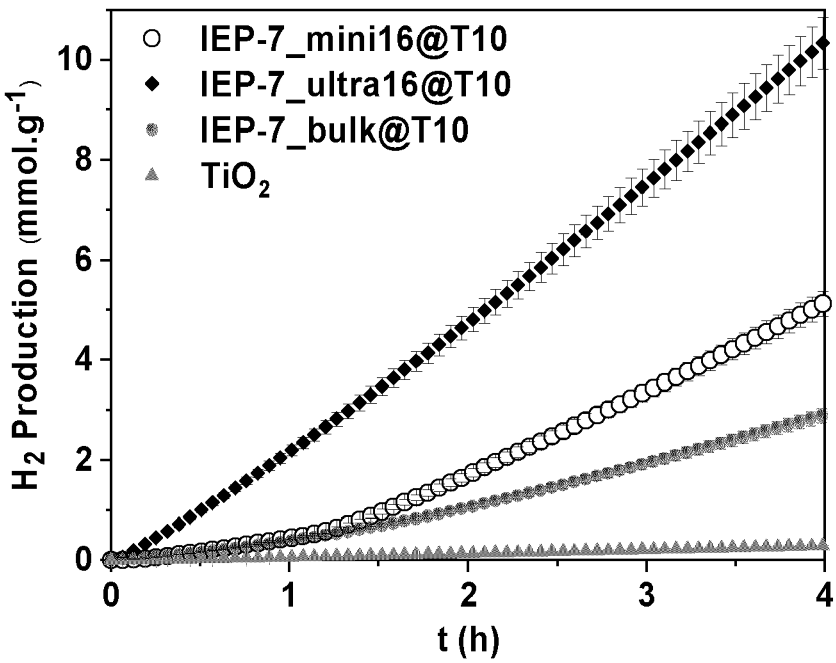
IEP-7_mini16@T10
IEP-7_ultra16@T10
IEP-7_bulk@T10
TiO2
H2 Production (mmol.g-1)
t (h)
0
2
4
6
8
10
0
1
2
3
4

Figure 11

Europäisches Patentamt
European Patent Office
Office européen des brevets

# EUROPEAN SEARCH REPORT

Application Number
EP 22 38 2566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG PENG ET AL: "Solution-Dispersible, Colloidal, Conjugated Porous Polymer Networks with Entrapped Palladium Nanocrystals for Heterogeneous Catalysis of the Suzuki-Miyaura Coupling Reaction", CHEMISTRY OF MATERIALS, vol. 23, no. 23, 17 November 2011 (2011-11-17), pages 5243-5249, XP093003236, US ISSN: 0897-4756, DOI: 10.1021/cm202283z | 2,3,5-8, 14,15 | INV. C08L65/00 C09D165/00 C08G61/12 |
| Y | * abstract, page 5243, left column, lines 3 to 8, page 5243, left column, line 15, page 5244, left column, fourth paragraph, right column, first paragraph, page 5245, left column, second paragraph, left column, first paragraph, Figure 1 (a) to (c) * ----- | 1,9, 11-13 | |
| X | CHENG XINFENG ET AL: "Star-shaped conjugated systems derived from thienyl-derivatized poly(triphenylamine)s as active materials for electrochromic devices", JOURNAL OF ELECTROANALYTICAL CHEMISTRY, vol. 677-680, 1 July 2012 (2012-07-01), pages 24-30, XP093003372, AMSTERDAM, NL ISSN: 1572-6657, DOI: 10.1016/j.jelechem.2012.04.017 * abstract, scheme 1, section 3.1.4, figure 4 * ----- | 8,10,15 | TECHNICAL FIELDS SEARCHED (IPC) C08G |

-/--

The present search report has been drawn up for all claims

1

| Place of search | Date of completion of the search | Examiner |
|---|---|---|
| Munich | 1 December 2022 | Kahl, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 3

Europäisches Patentamt
European Patent Office
Office européen des brevets

# EUROPEAN SEARCH REPORT

Application Number
EP 22 38 2566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KETI PIRADASHVILI ET AL: "Reactions and Polymerizations at the Liquid–Liquid Interface", CHEMICAL REVIEWS, vol. 116, no. 4, 24 February 2016 (2016-02-24), pages 2141-2169, XP055391094, US ISSN: 0009-2665, DOI: 10.1021/acs.chemrev.5b00567 * page 2144, second full paragraph * ----- | 1 | |
| Y | ANTONIETTI M, LANDFESTER K: "Polyreactions in miniemulsions", PROG. POLYM. SCI,, vol. 27, no. 4, 1 January 2002 (2002-01-01), pages 689-757, XP003022209, DOI: 10.1016/S0079-6700(01)00051-X * abstract, page 715, lines 11 to 14, Table 2 on page 705 and 706 * ----- | 1 | TECHNICAL FIELDS SEARCHED (IPC) |
| Y | Matcon Ltd: "How Microfluidizer Processors work ¦ Superior Particle Size Reduction", , 22 June 2021 (2021-06-22), XP93003375, Retrieved from the Internet: URL:http://web.archive.org/web/20210622194906/https://www.microfluidics-mpt.com/microfluidics-technology/how-it-works [retrieved on 2022-11-30] * whole document and diagramm on page 5 * ----- | 1 | |

-/--

The present search report has been drawn up for all claims

1

| Place of search | Date of completion of the search | Examiner |
|---|---|---|
| Munich | 1 December 2022 | Kahl, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 38 2566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BARAWI MARIAM ET AL: "Conjugated Porous Polymers: Ground-Breaking Materials for Solar Energy Conversion", ADVANCED ENERGY MATERIALS, [Online] vol. 11, no. 43, 1 August 2021 (2021-08-01), page 2101530, XP093003634, DE ISSN: 1614-6832, DOI: 10.1002/aenm.202101530 Retrieved from the Internet: URL:https://onlinelibrary.wiley.com/doi/full-xml/10.1002/aenm.202101530> [retrieved on 2022-11-29] * section 3.4, figure 9 * ----- | 9,11-13 | |
| | | | TECHNICAL FIELDS SEARCHED (IPC) |

The present search report has been drawn up for all claims

1

| Place of search | Date of completion of the search | Examiner |
|---|---|---|
| Munich | 1 December 2022 | Kahl, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 3 of 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **U. DIAZ et al.** *Coord. Chem Rev.,* 2016, vol. 311, 85
- **H. BILDIRIR.** *Mater Horizon,* 2017, vol. 4, 546
- **GU, C. et al.** *Adv. Mater,* 2013, 3443
- **GU, C. et al.** *Angew. Chem., Int. Ed.,* 2015, vol. 54, 11540
- **GU, C et al.** *Angew. Chem., Int. Ed,* 2016, vol. 55, 3049
- **GU, C. et al.** *Angew. Chem., Int. Ed.,* 2015, vol. 54, 13594
- **LIRAS, M. ; IGLESIAS, M. ; SANCHEZ, F.** *Macromolecules,* 2016, vol. 49, 1666-1673
- **C. G. LÓPEZ-CALIXTO et al.** *ACS Catal.,* 2020, vol. 10, 9804-9812
- **A. MOLINA et al.** New Anthraquinone-Based Conjugated Microporous Polymer Cathode with Ultrahigh Specific Surface Area for High-Performance Lithium-Ion Batteries. *Adv. Funct. Mater.,* 2020, 1908074
- Metal-Catalyzed Cross coupling Reactions and More. Wiley-VCH, 2014
- **PHAN et al.** On the Nature of the Active Species in Palladium Catalyzed Mizoroki-Heck and Suzuki-Miyaura Couplings-Homogeneous or Heterogeneous Catalysis. *A Critical Review, Advanced Synthesis & Catalysis,* 2006, vol. 348 (6), 609-679
- **JOHN HARTWIG.** Organotransition Metal Chemistry-From Bonding to Catalysis. University Science Books, 2010
- **R. CHINCHILLA ; C. NÁJERA.** *Chem. Soc. Rev.,* 2011, vol. 40, 5084-5121
- **R. CHINCHILLA ; C. NÁJERA.** *Chem. Rev.,* 2007, vol. 107 (3), 874-922
- **MIYAURA et al.** *Chem. Rev.,* 1995, vol. 95, 2457-2483
- **HAN.** *Chem. Soc. Rev.,* 2013, vol. 42, 5270-5298
- **C. CORDOVILLA et al.** *ACS Catal.,* 2015, vol. 5 (5), 3040-3053
- McCutcheon's Emulsifiers and Detergents Handbook. McCutcheon Division, Manufacturing Confectioner Publishing Co, 1999
- **T. YOGO et al.** *J. Am. Chem. Soc.,* 2005, vol. 127, 12162-12163
- **C. G. LOPEZ-CALIXTO et al.** *Appl. Catal. B.,* 2019, vol. 258, 117933
- **G. ALBANO et al.** *Chemistry Select,* 2018, vol. 3, 1749
- **M. LIRAS et al.** *Macromolecules,* 2016, vol. 49, 1666-1673
- **C.G. LÓPEZ-CALIXTO et al.** *Applied Catalysis B: Environmental,* 2019, vol. 258, 117933
- **COLLADO, L. ; NARANJO, T. ; GOMEZ-MENDOZA, M. ; LOPEZ-CALIXTO, C. G. ; OROPEZA, F. E. ; LIRAS, M. ; MARUGÁN, J. ; DE, V. A. ; SHEA, P. O.** Conjugated Porous Polymers Based on BODIPY and BOPHY Dyes in Hybrid Heterojunctions for Artificial Photosynthesis. *Adv. Funct. Mater.,* 2021, 2105384